(19) **Europäisches Patentamt**
**European Patent Office**
**Office européen des brevets**

(11) **EP 3 442 142 B1**

(12) **EUROPEAN PATENT SPECIFICATION**

(45) Date of publication and mention
of the grant of the patent:
**06.01.2021 Bulletin 2021/01**

(51) Int Cl.:
*H04J 99/00* (2009.01)          *H04B 7/04* (2017.01)
*H04B 7/10* (2017.01)          *H04W 16/28* (2009.01)
*H04W 56/00* (2009.01)

(21) Application number: **17778879.1**

(22) Date of filing: **21.02.2017**

(86) International application number:
**PCT/JP2017/006431**

(87) International publication number:
**WO 2017/175500 (12.10.2017 Gazette 2017/41)**

(54) **COMMUNICATION CONTROL DEVICE, TERMINAL DEVICE, METHOD, AND PROGRAM**

KOMMUNIKATIONSSTEUERUNGSVORRICHTUNG, ENDGERÄTEVORRICHTUNG, VERFAHREN UND PROGRAMM

DISPOSITIF DE COMMANDE DE COMMUNICATION, ÉQUIPEMENT TERMINAL, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2016 JP 2016077295**

(43) Date of publication of application:
**13.02.2019 Bulletin 2019/07**

(73) Proprietor: **Sony Corporation**
**Tokyo 108-0075 (JP)**

(72) Inventor: **MIZUSAWA, Nishiki**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**WO-A1-2015/025838     WO-A1-2015/045658**
**WO-A1-2016/013351     US-A1- 2013 148 644**
**US-A1- 2013 182 593     US-A1- 2013 336 135**
**US-A1- 2014 254 715**

**Description**

Technical Field

The present disclosure relates to a communication control apparatus, a terminal apparatus, a method, and a program.

Background Art

To address recent rapid increase in traffic, it is urgent that wireless access capabilities are improved. To realize a high-speed and large-capacity wireless access network, it is studied to arrange a macro cell in which a relatively low frequency of an ultra-high frequency (UHF) band is used and a small cell in which a relatively high frequency is used in an overlay manner. Further, in a small cell in which a high frequency band is used, it is studied to utilize full-dimension multiple-input and multiple-output (FD-MIMO) which compensates for a large propagation loss.

For example, the following Patent Literature 1 discloses a technology of beamforming and transmitting a cell-specific reference signal (CRS) to perform communication utilizing FD-MIMO.

Citation List

Patent Literature

Patent Literature 1: WO 2015/045658

US 2013/148644 discloses a method for transmitting a frame including generating an omni portion of the frame, the omni portion including a non-beamformed long training field and a signal field, the non-beamformed long training field including channel estimation information used to decode the signal field, the non-beamformed long training field configured to be transmitted through one of multiple antennas and multiple streams. The method also includes generating a multi-stream portion of the frame, the multi-stream portion including a data field and a multi-stream long training field, the multi-stream long training field including station-specific decoding information for station-specific data in the data field. The method further includes applying a beamforming indicator to the signal field of the omni portion, and transmitting the frame.

Disclosure of Invention

Technical Problem

However, the technology disclosed in the above-described Patent Literature 1 is far from sufficient as a technology for utilizing FD-MIMO. For example, there is room for improvement regarding coexistence of a terminal apparatus which utilizes FD-MIMO and a terminal apparatus which does not utilize FD-MIMO. Therefore, the present disclosure provides a mechanism which enables more appropriate coexistence of a terminal apparatus which utilizes FD-MIMO and a terminal apparatus which does not utilize FD-MIMO.

Solution to Problem

According to the present disclosure, there is provided communication control apparatuses, a terminal apparatus, corresponding methods and a computer program as defined in the claims.

Advantageous Effects of Invention

As described above, according to the present disclosure, a mechanism is provided which enables more appropriate coexistence of a terminal apparatus which utilizes FD-MIMO and a terminal apparatus which does not utilize FD-MIMO. Note that the effects described above are not necessarily limitative. With or in the place of the above effects, there may be achieved any one of the effects described in this specification or other effects that may be grasped from this specification.

Brief Description of Drawings

[FIG. 1] FIG. 1 is a diagram for explaining outline of FD-MIMO.

[FIG. 2] FIG. 2 is a diagram illustrating an example of directivity in a horizontal plane direction of a sector antenna.

[FIG. 3] FIG. 3 is a diagram illustrating an example of a frame configuration of a downlink signal in related art.

[FIG. 4] FIG. 4 is a diagram illustrating an example of a position of a CRS on a resource block.

[FIG. 5] FIG. 5 is an explanatory diagram for explaining a first scenario.

[FIG. 6] FIG. 6 is an explanatory diagram for explaining the first scenario.

[FIG. 7] FIG. 7 is an explanatory diagram for explaining a second scenario.

[FIG. 8] FIG. 8 is an explanatory diagram for explaining the second scenario.

[FIG. 9] FIG. 9 is an explanatory diagram for explaining a third scenario.

[FIG. 10] FIG. 10 is an explanatory diagram for explaining the third scenario.

[FIG. 11] FIG. 11 is an explanatory diagram illustrating an example of a schematic configuration of a system according to an embodiment of the present disclosure.

[FIG. 12] FIG. 12 is a block diagram illustrating an example of a configuration of a base station according to the embodiment.

[FIG. 13] FIG. 13 is a block diagram illustrating an example of a configuration of a terminal apparatus according to the embodiment.

[FIG. 14] FIG. 14 is a block diagram illustrating an example of a configuration of a communication control apparatus according to the embodiment.

[FIG. 15] FIG. 15 is a diagram illustrating an example of a frame configuration of a downlink signal to be transmitted by a macro cell base station according to the embodiment in the first scenario.

[FIG. 16] FIG. 16 is a sequence diagram illustrating an example of flow of communication processing executed in a system according to the embodiment.

[FIG. 17] FIG. 17 is a diagram illustrating an example of a frame configuration of a downlink signal to be transmitted by a small base station according to the embodiment in the second scenario.

[FIG. 18] FIG. 18 is a sequence diagram illustrating an example of flow of communication processing executed in a system according to the embodiment.

[FIG. 19] FIG. 19 is a diagram illustrating an example of a frame configuration of a downlink signal to be transmitted by the small cell base station according to the embodiment in the third scenario.

[FIG. 20] FIG. 20 is a sequence diagram illustrating an example of flow of communication processing executed in a system according to the embodiment.

[FIG. 21] FIG. 21 is an explanatory diagram for explaining outline of technical features regarding handover according to the embodiment.

[FIG. 22] FIG. 22 is a sequence diagram illustrating an example of flow of processing according to handover procedure executed in the system according to the embodiment.

[FIG. 23] FIG. 23 is a block diagram illustrating an example of a schematic configuration of a server.

[FIG. 24] FIG. 24 is a block diagram illustrating a first example of a schematic configuration of an eNB.

[FIG. 25] FIG. 25 is a block diagram illustrating a second example of a schematic configuration of an eNB.

[FIG. 26] FIG. 26 is a block diagram illustrating an example of a schematic configuration of a smartphone.

[FIG. 27] FIG. 27 is a block diagram illustrating an example of a schematic configuration of a car navigation apparatus.

Mode(s) for Carrying Out the Invention

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, in this specification and the drawings, there are cases in which elements having substantially the same functional configuration are distinguished by adding different letters after the same reference numeral. For example, a plurality of elements having substantially the same functional configuration are distinguished as terminal apparatuses 200A, 200B, and 200C as necessary. However, when it is not necessary to particularly distinguish a plurality of elements having substantially the same functional configuration, only the same reference numeral is attached. For example, when it is not necessary to particularly distinguish terminal apparatuses 200A, 200B and 200C, they are referred to simply as a "terminal apparatus 200."

Note that description will be provided in the following order.

1.     Introduction
1.1.   FD-MIMO
1.2.   Coverage area of base station

1.3.    Configuration of downlink signal
1.4.    Technical problems
1.5.    Scenarios
2.    Configuration examples
3.    Technical features
3.1.    Beam transmission
3.2.    Sub frame configuration
3.3.    Handover
4.    Application examples
5.    Conclusion

«1. Introduction»

<1.1. FD-MIMO>

To address recent rapid increase in traffic, it is urgent that wireless access capabilities are improved. To realize a high-speed and large-capacity wireless access network, it is studied to arrange a macro cell in which a relatively low frequency of an ultra-high frequency (UHF) band is used and a small cell in which a relatively high frequency is used in an overlay manner. Further, in a small cell in which a high frequency band is used, it is studied to utilize full-dimension multiple-input and multiple-output (FD-MIMO) which compensates for a large propagation loss.

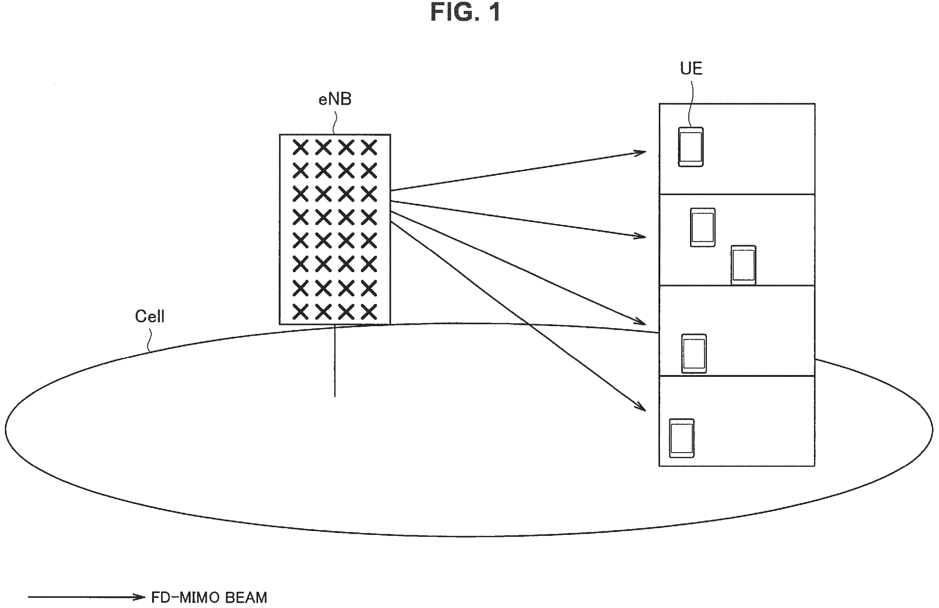

In FD-MIMO, it is possible to direct a sharp beam toward upper floors of a building using an array antenna in which a number of antenna elements are two-dimensionally arranged. In FD-MIMO, a use case is studied which improves coverage of the building by using a beam sectored for each tilt angle, or the like. FIG. 1 is a diagram for explaining outline of FD-MIMO. As illustrated in FIG. 1, an eNB includes an array antenna of FD-MIMO. The eNB allocates different beams to UE on the fourth floor, UE on the third floor, UE on the second floor and UE on the ground floor of a building. In this manner, coverage of the building is improved.

In FD-MIMO in which a sharp beam is formed, and a signal is transmitted using an array antenna including a number of antenna elements, it is desired to transmit a number of reference signals for determining a weighting matrix of an antenna. To solve a problem of overhead of the reference signals, a problem of increase in processing at the eNB and the UE, and a problem of increase in cost of a wireless apparatus of the eNB, employment of a configuration of subarray type FD-MIMO and a beamformed reference signal, or the like, is studied.

The eNB can beamform and transmit a CSI-RS using a cell-specific weighting matrix allocated for each subarray. This beamformed CSI-RS will be also referred to as a cell-specific beamformed CSI-RS in the following description. To transmit data to UE which detects the cell-specific beamformed CSI-RS, it is studied to allocate the same cell-specific beam, that is, multiply data by a cell-specific weighting matrix which is the same as that of the cell-specific beamformed CSI-RS. Further, it is studied to allocate a plurality of cell-specific beams to UE which detects a plurality of cell-specific beamformed CSI-RSs and multiply data to the UE by a UE-specific weighting matrix and a plurality of cell specific weighting matrices and transmit the data. In this case, it becomes possible to provide a sharper beam to the UE and provide higher communication quality and a higher data rate.

<1.2. Coverage area of base station>

A size (that is, a cell radius) of a coverage area of the base station is calculated on the basis of required received power of UE, transmission power of the base station, an allowable propagation loss calculated from transmission/reception antenna gain, or the like, and propagation loss characteristics in a frequency being used.

A CRS to be transmitted by the base station in downlink is made up of a reference signal sequence which is uniquely determined in accordance with a cell ID allocated for each base station. The UE measures reception strength of the CRS transmitted by the base station in downlink upon cell selection and selects a cell for which a value of the reception strength of the CRS is equal to or greater than a threshold. From the above, it can be said that the size of the coverage area is determined by transmission power of the CRS.

(1) Non-directional area

There is a case where the base station provides a cell using a non-directional antenna. In this case, the base station is located at the center of the cell. The non-directional antenna is an antenna which radiates uniform radio waves which do not have directivity in a horizontal plane direction. A size of a coverage area provided by the non-directional antenna is determined in accordance with transmission power of the base station and a propagation loss.

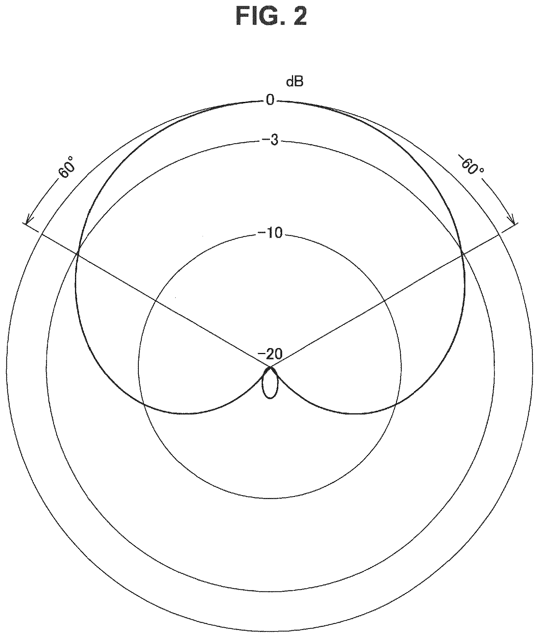

There is a case where the base station provides a cell using a sector antenna. The sector antenna is an antenna which radiates radio waves having directivity in a horizontal direction. The sector antenna is realized by, for example, a metal reflector being disposed on a back side of a dipole antenna. FIG. 2 is a diagram illustrating an example of directivity in a horizontal plane direction of the sector antenna. A beam width is defined at a width at which antenna gain becomes, for example, -3 dB. Therefore, the beam width of the sector antenna illustrated in FIG. 2 becomes 120°. The base station can provide a plurality of cells using, for example, a plurality of sector antennas. For example, a base station which is provided at a point contacted by three cells (that is, sectors) provides these three cells using three sector antennas. By this means, it becomes, for example, possible to house a number of UE in an urban area, or the like. A size of a coverage area which is formed with such sector antennas and which is divided into three sectors is also determined in accordance with transmission power of the base station and a propagation loss.

In the following description, the above-described coverage area including a sector cell formed by the sector antenna, whose size is determined in accordance with transmission power of the base station and a propagation loss will be also referred to as a non-directional area. In contrast to this, a coverage area formed by a sharp beam like a three-dimensional beam will be also referred to as a directional area.

(2) Directional area

A coverage area (that is, a directional area) formed by FD-MIMO is an area which is formed by antenna directivity unlike with a non-directional area. However, radio wave strength within the directional area is maintained relatively constant.

<1.3. Configuration of downlink signal>

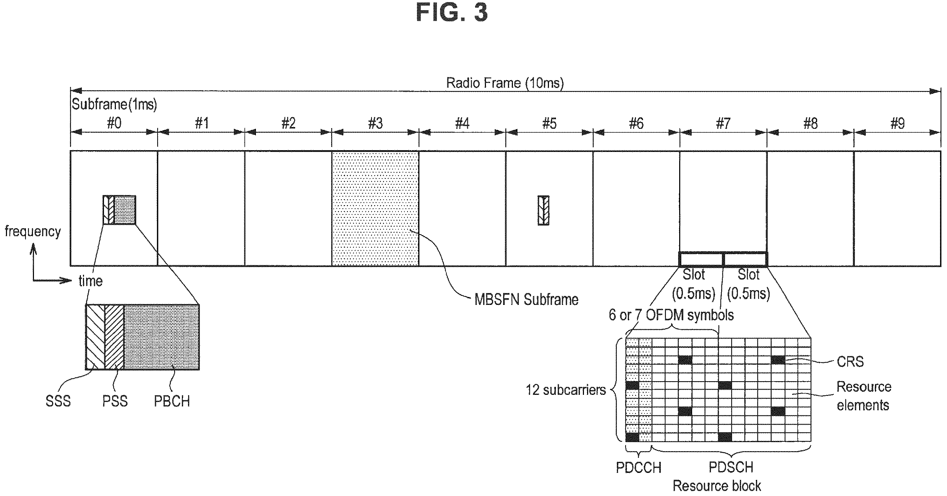

FIG. 3 is a diagram illustrating an example of a frame configuration of a downlink signal in related art. As illustrated in FIG. 3, in a subframe whose sub frame number is 0 (that is, a subframe #0) and a subframe #5, a synchronization signal (a primary synchronization signal (PSS) and a secondary synchronization signal (SSS)) is arranged. Further, immediately after the synchronization signal of the subframe #0, a physical broadcast channel (PBCH) is arranged. Further, in a subframe #3, a multicast-broadcast single-frequency network (MBSFN) subframe is arranged. Further, in a subframe in which the MBSFN subframe is not arranged, a physical downlink control channel (PDCCH) and a physical downlink shared channel (PDSCH) including a CRS are transmitted.

- Synchronization signal

The synchronization signal is a signal for establishing synchronization between the base station and the terminal apparatus. The synchronization signal is always arranged in central 72 subcarriers regardless of a coverage bandwidth to enable simple cell search even if a system bandwidth of the base station is unknown. The terminal apparatus can receive the synchronization signal and achieve symbol synchronization and frame synchronization.

Arrangement of the synchronization signal is different in accordance with whether a communication scheme is frequency division duplex (FDD) or time division duplex (TDD). In a case of FDD, the PSS is transmitted using the last symbol in the first slot in each of the sub frames #0 and #5, and the SSS is transmitted using a symbol immediately before the PSS. A frame configuration illustrated in FIG. 3 is a frame configuration in a case of FDD. In a case of TDD, the PSS is transmitted using the third symbol in each of the subframes #1 and #6, and the SSS is transmitted using a symbol three symbols before the PSS (that is, the last symbol in each of the subframes #0 and #5). Therefore, the terminal apparatus can detect a communication scheme (that is, one of FDD and TDD) of the cell from the positions of the PSS and the SSS.

Further, the base station transmits a synchronization signal in accordance with a cell ID. Therefore, the terminal apparatus can detect a cell ID from the synchronization signal.

- Master information block (MIB)

The MIB is mapped to the PBCH. The MIB includes information of a downlink frequency bandwidth, the number of transmission antennas, a structure of control information, or the like.

- System information block (SIB)

The SIB is mapped to the PDSCH. The SIB includes information indicating whether or not UE can be located within a cell, an uplink bandwidth, a parameter of a random access channel (RACH), a parameter regarding uplink transmission power control, information regarding cell reselection, information regarding an adjacent cell, or the like.

- Cell-specific reference signal (CRS)

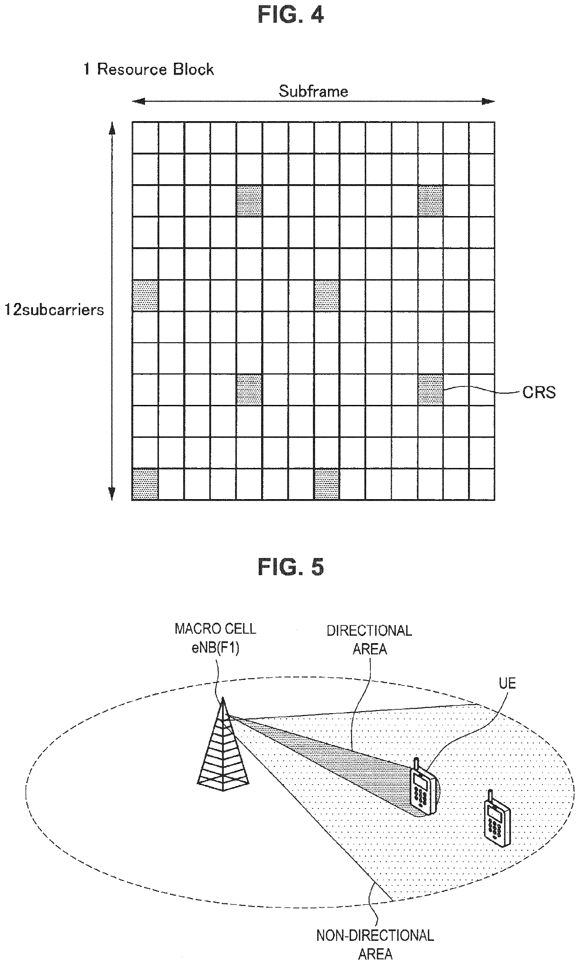

The CRS is used for receiving (for example, demodulating) a PBCH, a PDCCH and a PDSCH. Further, the CRS is used for measuring reception strength. The CRS is inserted in the first and the third to the last orthogonal frequency division multiplexing (OFDM) symbols within a slot at intervals of six subcarriers in an entire downlink frequency domain. A signal sequence of the CRS is uniquely determined from 504 types of signal sequences corresponding to 504 types of cell IDs. Meanwhile, there are six types of positions (that is, frequency shifts) on a frequency with which the CRS is to be transmitted. FIG. 4 is a diagram illustrating an example of positions of the CRS on a resource block. A cell ID is determined so that frequency shits of the CRS do not overlap among base stations. By this means, it is possible to avoid interference of the CRS among the base stations. Further, in the case where a downlink signal is transmitted using a plurality of antennas, offset is added to an OFDM symbol and a subcarrier for each antenna port so that the CRS does not overlap for each antenna. That is, the terminal apparatus which detects a cell ID from the PSS and the SSS can accurately recognize and measure a resource position in which the CRS is to be transmitted, so that it is possible to achieve frequency synchronization over the entire band.

- Multicast-broadcast single-frequency network (MBSFN) subframe

The MBSFN subframe is a subframe for multicast or broadcast. The MBSFN subframe is set in subframes other than subframes #0, #4, #5 and #9 in FDD, and set in subframes other than subframes #0, #1, #2, #5 and #6 in TDD.
Note that, in the case where multicast or broadcast is not performed, anything does not have to be transmitted in the MBSFN subframe.

- Operation

The base station transmits the synchronization signal, the MIB, the SIB and the CRS in downlink.
The terminal apparatus achieves frame synchronization on the basis of the synchronization signal and decodes the MIB mapped to the PBCH. Then, the terminal apparatus obtains a downlink frequency bandwidth from the MIB, receives the PDCCH, obtains a position of a resource block of the PDSCH to which the SIB is allocated and decodes the SIB from the corresponding PDSCH. Further, the terminal apparatus detects a cell ID on the basis of the synchronization signal and achieves CRS synchronization while taking into account frequency offset in accordance with the cell ID.

<1.4. Technical problems>

(1) First problem

The first problem is that it is difficult for a terminal apparatus located outside coverage of the non-directional area to obtain effects of FD-MIMO even if the terminal apparatus is located within coverage of the directional area.
In order that the terminal apparatus obtains effects of FD-MIMO, it is necessary to select a component carrier to which FD-MIMO is to be provided and achieve synchronization, and measure and report a cell-specific beamformed CSI-RS. To achieve this, it is preferable that the terminal apparatus receives the synchronization signal and the CRS, and achieves synchronization, selects a cell, or the like.
Coverage largely differs between a signal with high antenna gain transmitted using a sharp beam and other signals. However, in present standard specifications, at least the synchronization signal and the CRS are not beamformed. Therefore, only a terminal apparatus located within the coverage of the non-directional area can receive the synchronization signal and the CRS. It is therefore difficult for a terminal apparatus located outside the coverage of the non-directional area to obtain effects of FD-MIMO even if the terminal apparatus is located within the coverage of the directional area.
Because of the circumstances described above, it is preferable that a terminal apparatus can receive the synchronization signal and the CRS if the terminal apparatus is located within the coverage of the directional area even if the terminal apparatus is located outside the coverage of the non-directional area. Therefore, in the following embodiments, a mechanism is provided in which the base station transmits the synchronization signal and the CRS using a beam.

(2) Second problem

The second problem relates to frequency of transmission of the CRS using a beam.
When it is assumed that the terminal apparatus moves, it is preferable that a reference signal for synchronization (that is, a CRS) is transmitted at frequency of once every several milliseconds (ms) so that the terminal apparatus receives a sharp beam of FD-MIMO. While, concerning this point, the above-described Patent Literature 1 discloses transmitting a CRS using a beam, whether or not a CRS is transmitted using a beam is switched for each radio frame. Therefore, transmission of a CRS using a beam is performed for each of several tens of milliseconds at earliest, it is difficult for the terminal apparatus which moves at high speed to receive a sharp beam of FD-MIMO.

Therefore, in the following embodiments, a mechanism is provided in which the base station frequently transmits the CRS using a beam.

The above-described problem can occur in a similar manner also concerning the synchronization signal. Therefore, in the following embodiments, a mechanism is provided in which the base station frequently transmits the synchronization signal using a beam.

### (3) Third problem

The third problem relates to interference.

As described above with reference to FIG. 4, interference of the CRS among the base stations is avoided by cell IDs being determined so that frequency shits of the CRS do not overlap among the base stations. However, in the case where the base station utilizes a number of beams, allocates different cell IDs to the respective beams and transmits the CRS on the beams, there is a possibility that frequency shifts of the CRS overlap among the beams or between a beam and an adjacent cell, and interference occurs.

Further, in the case where a CRS which is beamformed and a CRS which is not beamformed are transmitted using the same subframe, an error may occur in measurement of the CRSs or interference may occur.

The above-described problem occurs in a similar manner also concerning the synchronization signal. Subframes in which the synchronization signal is to be transmitted and positions on a frequency of the synchronization signal are determined, and a signal sequence differs in accordance with cell IDs. In the case where the base station utilizes a number of beams, allocates different cell IDs to the respective beams and transmits the synchronization signal on the beams, there is a possibility that interference of the synchronization signal occurs among the beams or between a beam and the adjacent cell.

Therefore, in the following embodiments, a mechanism is provided which prevents interference between a CRS which is beamformed and a CRS which is not beamformed, and between a synchronization signal which is beamformed and a synchronization signal which is not beamformed.

### (4) Fourth problem

The fourth problem relates to handover.

In the present specifications, whether or not it is necessary to execute handover is determined on the basis of reception strength in the non-directional area. However, for a terminal apparatus which receives a sharp beam of FD-MIMO in the directional area, handover is not required. Further, given that the terminal apparatus moves while receiving a beam of FD-MIMO, frequent occurrence of handover associated with large change of reception strength in the non-directional area is not desirable.

Therefore, in the following embodiments, a mechanism is provided which eases handover conditions for a terminal apparatus which receives a beam of FD-MIMO.

### <1.5. Scenario>

An example of a scenario in which the above-described technical problems become evident will be described below.

### (1) First scenario

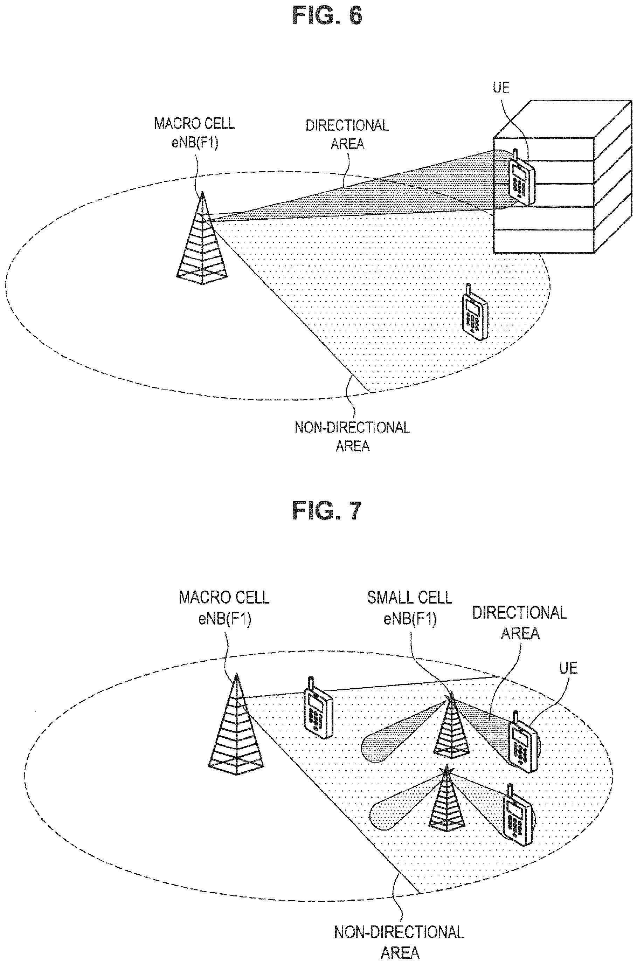

The present scenario is a scenario in which a beam of FD-MIMO is transmitted in a macro cell. The present scenario will be described below with reference to FIG. 5 and FIG. 6.

FIG. 5 and FIG. 6 are explanatory diagrams for explaining the first scenario. In the examples illustrated in FIG. 5 and FIG. 6, the macro cell includes a directional area and a non-directional area. In the present scenario, a frequency is the same F1 both in the directional area and in the non-directional area. That is, the macro cell base station multiplies part of resources among resources to be transmitted using a frequency carrier F1 by a weighting matrix and performs transmission to the directional area using a beam.

As illustrated in FIG. 5, there is a case where a terminal apparatus (UE) is located within coverage of both the directional area and the non-directional area. In this case, the terminal apparatus can achieve synchronization with a beamformed downlink signal to be transmitted in the directional area in the case where a beam is allocated by a macro cell eNB by achieving synchronization with a CRS to be transmitted in the non-directional area.

Meanwhile, as illustrated in FIG. 6, there is a case where the terminal apparatus is located within the coverage of the directional area and outside the coverage of the non-directional area. In this case, because it is difficult to secure sufficient reception strength for a downlink signal transmitted in the non-directional area, it is difficult for the terminal apparatus to achieve synchronization with the CRS transmitted in the non-directional area. In accordance with this, it is difficult for the terminal apparatus to perform cell selection in synchronization with a beamformed downlink signal transmitted in the directional area. Therefore, even if a terminal apparatus located outside the coverage of the non-directional area is located within the coverage of the directional area, it is difficult to perform data communication with a macro cell.

It is therefore preferable that the synchronization signal and the CRS are transmitted on beams. By this means, a terminal apparatus which is located outside the coverage of the non-directional area can detect a synchronization signal on beams, receive MIB, perform cell selection, and perform CRS synchronization, SIB reception and random access to perform data communication with a macro cell.

Here, because a downlink signal in the non-directional area and a downlink signal in a directional area which are to be transmitted from the same macro cell base station use the same cell ID, resource positions and signal sequences of the CRS become also the same. Because maximum power which can be transmitted by the macro cell terminal apparatus 100 is specified, power of the CRS to be transmitted to the non-directional area 103 decreases by an amount corresponding to power of the CRS transmitted to the directional area 104, which leads to reduction of a coverage area and degradation of communication quality.

(2) Second scenario

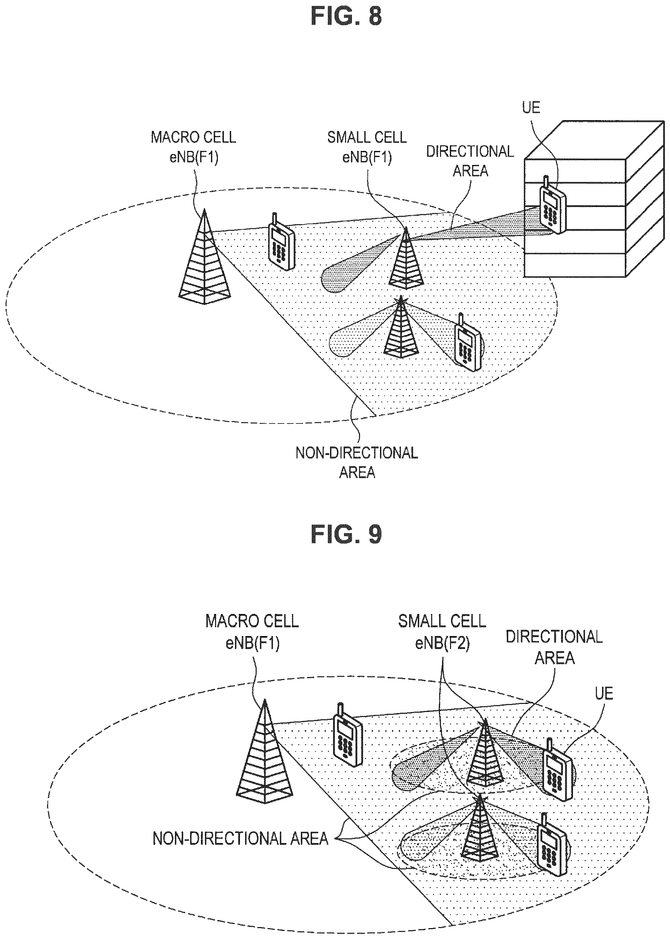

The present scenario is a scenario in which a beam of FD-MIMO to be transmitted by the small cell using the same frequency as the frequency of the macro cell is selected as a primary cell (PCell) or a secondary cell (SCell). The present scenario will be described below with reference to FIG. 7 and FIG. 8.

FIG. 7 and FIG. 8 are explanatory diagrams for explaining the second scenario. In the examples illustrated in FIG. 7 and FIG. 8, a macro cell forms a non-directional area, and a small cell forms a directional area. It is then assumed that the macro cell and the small cell use the same frequency F1. However, because base stations which provide the macro cell and the small cell are different, the terminal apparatus needs to separately achieve frame synchronization and frequency synchronization with the respective base stations to connect to the respective base stations.

As illustrated in FIG. 7, there is a case where the terminal apparatus is located within both the coverage of the small cell and the coverage of the macro cell. In this case, there is a possibility that the terminal apparatus selects a macro cell as the PCell. The terminal apparatus then acquires information such as a frequency of the small cell from the macro cell, detects a beamformed CSI-RS, or the like, to be transmitted in the small cell on the basis of the acquired information and reports the beamformed CSI-RS, or the like, to the macro cell eNB. By this means, the terminal apparatus can add a component carrier of the small cell as the SCell. However, to detect a beamformed CSI-RS, or the like, which is to be transmitted from the small cell eNB different from the macro cell eNB which provides the PCell, it is necessary to achieve frame synchronization and frequency synchronization with the small cell.

As illustrated in FIG. 8, there is a case where the terminal apparatus is located within the coverage of the directional area of the small cell and outside the coverage of the non-directional area of the macro cell. In this case, because it is difficult to secure sufficient reception strength for a downlink signal to be transmitted in the non-directional area (that is, the macro cell), it is difficult for the terminal apparatus to achieve synchronization with the CRS to be transmitted in the macro cell. In accordance with this, it is difficult for the terminal apparatus to perform cell selection in synchronization with a beamformed downlink signal to be transmitted in the directional area (that is, the small cell). Therefore, even if a terminal apparatus which is located outside the coverage of the macro cell is located within the coverage of the small cell, it is difficult for the terminal apparatus to perform data communication with both the macro cell and the small cell. In this case, it is preferable that the synchronization signal and the CRS are transmitted on beams of the small cell. By this means, even if the terminal apparatus is located outside the coverage of the macro cell, the terminal apparatus can detect the synchronization signal on the beams of the small cell, receive an MIB, select a cell and perform CRS synchronization, SIB reception and random access to perform data communication.

However, because cell IDs of the macro cell and the small cell are different, resource positions and signal sequences with which the CRS is to be transmitted can be different. Therefore, in the case where the CRS is transmitted using the same resource block in the macro cell and in the small cell, interference can occur. This similarly applies to the synchronization signal.

(3) Third scenario

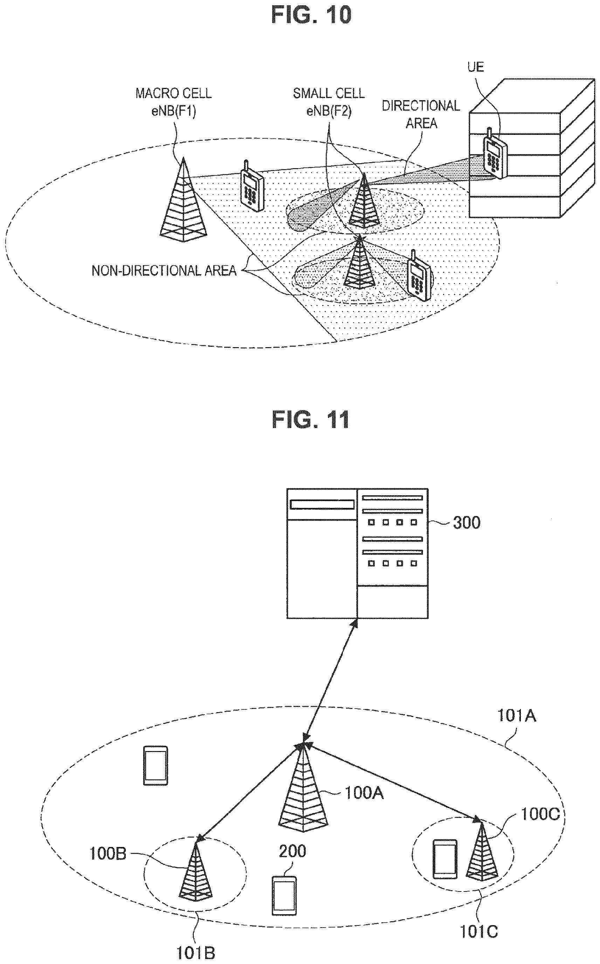

The present scenario is a scenario in which a beam of FD-MIMO to be transmitted by the small cell at a frequency different from that of the macro cell is selected as the PCell or the SCell. The present scenario will be described below with reference to FIG. 9 and FIG. 10.

FIG. 9 and FIG. 10 are explanatory diagrams for explaining the third scenario. As illustrated in FIG. 9 and FIG. 10, the present scenario is a scenario different from the second scenario in that a frequency to be used is made different between the macro cell and the small cell. The frequency F1 is used in the non-directional area of the macro cell, and a frequency F2 is used in the non-directional area of the small cell and in the directional area of the small cell. To perform communication with the small cell, it is necessary to achieve frame synchronization and frequency synchronization with the small cell separately from the macro cell.

As illustrated in FIG. 9, there is a case where the terminal apparatus is located within the coverage of the non-directional area of the macro cell, the coverage of the non-directional area of the small cell and the coverage of the directional area. Such a terminal apparatus can receive the synchronization signal, the PBCH and the CRS transmitted in the macro cell and select the macro cell as the PCell. Further, the terminal apparatus can obtain information such as a frequency of the small cell from the macro cell, receive the synchronization signal, the PBCH and the CRS transmitted in the non-directional area of the small cell and achieve frame synchronization and frequency synchronization with the small cell. Therefore, the terminal apparatus can add a component carrier to be transmitted using a beam of the small cell as the SCell by detecting the beamformed CSI-RS and reporting the beamformed CSI-RS to the macro cell eNB.

As illustrated in FIG. 10, there is a case where the terminal apparatus is located within the coverage of the directional area of the small cell and outside the coverage of the non-directional area of the macro cell and the coverage of the non-directional area of the small cell. Because it is difficult for such a terminal apparatus to select the macro cell because reception strength of the synchronization signal, the PBCH and the CRS transmitted in the macro cell is not sufficient, it is difficult for the terminal apparatus to acquire information regarding a frequency carrier to be used by the small cell from the macro cell. Further, it is difficult for the terminal apparatus to select the small cell because reception strength of the synchronization signal, the PBCH and the CRS transmitted in the non-directional area of the small area is also not sufficient.

In this case, it is preferable that the synchronization signal and the CRS are transmitted on beams of the small cell. By this means, the terminal apparatus can select the small cell by receiving the synchronization signal and the CRS which are beamformed and transmitted in the small cell, so that the terminal apparatus can perform communication using beams.

«2. Configuration examples»

<2.1. Schematic system configuration example>

A schematic configuration of a system 1 according to an embodiment of the present disclosure will be described first with reference to FIG. 11.

FIG. 11 is an explanatory diagram illustrating an example of a schematic configuration of the system 1 according to an embodiment of the present disclosure. Referring to FIG. 11, the system 1 includes a wireless communication apparatus 100, a terminal apparatus 200, and a communication control apparatus 300.

The wireless communication apparatus 100 is a communication apparatus which provides wireless communication service to subordinate apparatuses. For example, the wireless communication apparatus 100 is a base station in a cellular system (or a mobile communication system). The base station 100 performs wireless communication with an apparatus (for example, the terminal apparatus 200) located inside a cell 101. For example, the base station 100 transmits a downlink signal of the terminal apparatus 200 and receives an uplink signal from the terminal apparatus 200. The cell 101 may be operated in accordance with an arbitrary wireless communication scheme such as, for example, LTE, LTE-advanced (LTE-A), GSM (registered trademark), UMTS, W-CDMA, CDMA200, WiMAX, WiMAX2 and IEEE802.16.

Here, the base station 100 is also referred to as an eNodeB (or eNB). The eNodeB here may be eNodeB defined in the LTE or the LTE-A, and may more typically mean communication equipment. Further, the base station 100 may be a macro cell base station which forms a macro cell, or a small cell base station which forms a small cell.

For example, a base station 100A, which is a macro cell base station, provides a macro cell 101A. Further, base stations 100B and 100C, which are small cell base stations, respectively provide small cells 101B and 101C. The macro cell base station 100A, and the small cell base stations 100B and 100C are connected through a backhaul link. The backhaul link may be wired or wireless. Further, the small cell base station may be a relay node. There is a case where the macro cell base station 100A, the small cell base stations 100B and 100C have the above-described functions of FD-MIMO and transmit information to the terminal apparatus 200 using beams.

The base station 100 is logically connected to other base stations with, for example, an X2 interface, and can transmit/receive control information, or the like. Further, the base station 100 is logically connected to a core network with, for example, an S1 interface, and can transmit/receive control information, or the like. Note that communication between these apparatuses can be physically relayed by various apparatuses.

The terminal apparatus 200 is a communication apparatus which can perform communication in a cellular system (or a mobile communication system). The terminal apparatus 200 performs wireless communication with a wireless communication apparatus (for example, the base station 100) in the cellular system. For example, the terminal apparatus 200 receives a downlink signal from the base station 100 and transmits an uplink signal to the base station 100.

Here, the terminal apparatus 200 is also referred to as a user. The user can be also referred to as user equipment (UE). The UE here may be UE defined in LTE or LTE-A and may more typically mean communication equipment.

The communication control apparatus 300 is functional entity which controls transmission of the synchronization signal, the CRS and the PBCH using beams, performed in the system 1. Typically, the communication control apparatus 300 is realized as the base station 100. Of course, the communication control apparatus 300 may be realized as a control node (that is, an upper node of the base station 100) within a core network or a packet data network (PDN).

<2.2. Configuration example of base station>

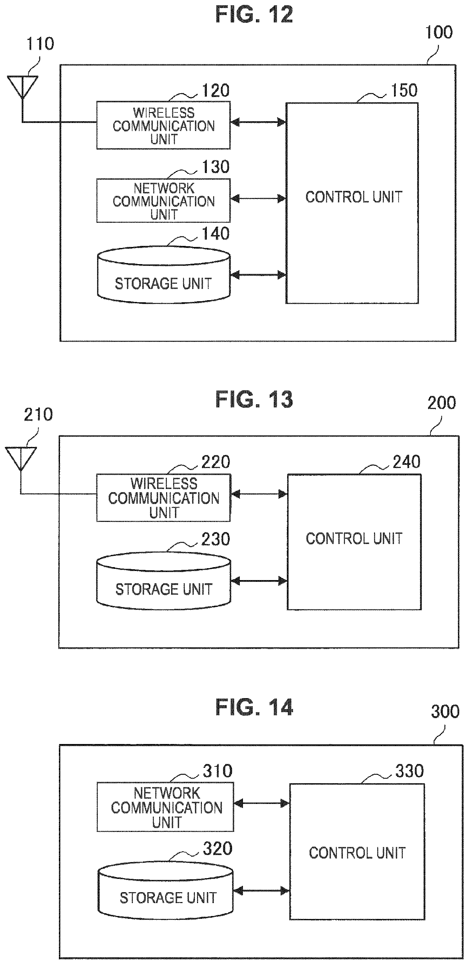

An example of a configuration of the base station 100 according to an embodiment of the present disclosure will be described with reference to FIG. 12.

FIG. 12 is a block diagram illustrating an example of the configuration of the base station 100 according to an embodiment of the present disclosure. Referring to FIG. 12, the base station 100 includes an antenna unit 110, a wireless communication unit 120, a network communication unit 130, a storage unit 140 and a control unit 150.

(1) Antenna unit 110

The antenna unit 110 radiates signals output from the wireless communication unit 120 to space as radio waves. Further, the antenna unit 110 converts radio waves in space into signals and outputs the signals to the wireless communication unit 120.

(2) Wireless communication unit 120

The wireless communication unit 120 transmits and receives signals. For example, the wireless communication unit 120 transmits a downlink signal to the terminal apparatus and receives an uplink signal from the terminal apparatus.

(3) Network communication unit 130

The network communication unit 130 transmits and receives information. For example, the network communication unit 130 transmits information to other nodes and receives information from other nodes. For example, the above-described other nodes include other base stations and a core network node.

(4) Storage unit 140

The storage unit 140 temporarily or permanently stores programs and various types of data for operation of the base station 100.

(5) Control unit 150

The control unit 150 provides various functions of the base station 100. The base station 100 operates on the basis of control by the control unit 150. Operation of the base station 100 based on control by the control unit 150 will be described in detail later.

<2.3. Configuration example of terminal apparatus>

An example of the configuration of the terminal apparatus 200 according to an embodiment of the present disclosure will be described with reference to FIG. 13. FIG. 13 is a block diagram illustrating an example of a configuration of a terminal apparatus 200 according to an embodiment of the present disclosure. Referring to FIG. 13, the terminal apparatus 200 includes an antenna unit 210, a wireless communication unit 220, a storage unit 230, and a control unit 240.

(1) Antenna unit 210

The antenna unit 210 radiates signals outputted from the wireless communication unit 220 into space as radio waves. Further, the antenna unit 210 converts radio waves in space into signals, and outputs the signals to the wireless communication unit 220.

(2) Wireless communication unit 220

The wireless communication unit 220 transmits and receives signals. For example, the wireless communication unit 220 receives a downlink signal from the base station and transmits an uplink signal to the base station.

(3) Storage unit 230

The storage unit 230 temporarily or permanently stores programs and various types of data for an operation of the terminal apparatus 200.

(4) Control unit 240

The control unit 240 provides various functions of the terminal apparatus 200. The terminal apparatus 200 operates on the basis of control by the control unit 240. Operation of the terminal apparatus 200 based on control by the control unit 240 will be described in detail later.

<2.4. Configuration example of communication control apparatus>

An example of the configuration of the communication control apparatus 300 according to an embodiment of the present disclosure will be described with reference to FIG. 14. FIG. 14 is a block diagram illustrating an example of a configuration of a communication control apparatus 300 according to an embodiment of the present disclosure. Referring to FIG. 14, the communication control apparatus 300 includes a network communication unit 310, a storage unit 320, and a control unit 330.

(1) Network communication unit 310

The network communication unit 310 transmits and receives information. For example, the network communication unit 310 transmits information to other nodes and receives information from other nodes. For example, the above-described other nodes include the base station 100 and a core network node.

(2) Storage unit 320

The storage unit 320 temporarily or permanently stores programs and various types of data for operation of the communication control apparatus 300.

(3) Control unit 330

The control unit 330 provides various functions of the communication control apparatus 300. The communication control apparatus 300 operates on the basis of control by the control unit 330. Operation of the communication control apparatus 300 based on control by the control unit 330 will be described in detail later.
Each base station 100 operates on the basis of control by the communication control apparatus 300. In the following description, a case where the base station 100 performs some operation on the basis of control by the communication control apparatus 300 will be also merely described as operation of the base station 100.

«3. Technical features»

<3.1. Beam transmission>

(1) Synchronization signal

The communication control apparatus 300 controls one or more base stations 100 so that two types of synchronization signals including a first synchronization signal (a PSS and an SSS) which is beamformed and a second synchronization signal (a PSS and an SSS) which is not beamformed are transmitted within one radio frame. The terminal apparatus 200 then performs reception processing of at least one of the two types of synchronization signals including the first synchronization signal which is beamformed and the second synchronization signal which is not beamformed, transmitted within one radio frame. By this means, because the terminal apparatus 200 can achieve frame synchronization even if the terminal apparatus 200 is located outside the coverage of the non-directional area in the case where the terminal apparatus 200 succeeds in receiving the first synchronization signal, the above-described first problem regarding the synchronization signal is solved. Further, because the first synchronization signal is arranged every radio frame, the above-described second problem regarding the synchronization signal is solved.

(2) CRS

The communication control apparatus 300 controls one or more base stations 100 so that two types of CRSs including a first CRS which is beamformed and a second CRS which is not beamformed are transmitted within one radio frame. The terminal apparatus 200 then performs reception processing of at least one of the first CRS which is beamformed and the second CRS which is not beamformed, transmitted within one radio frame. By this means, because the terminal apparatus 200 which succeeds in receiving the first CRS can achieve CRS synchronization even if the terminal apparatus 200 is located outside the coverage of the non-directional area, the above-described first problem regarding the CRS is solved. Further, the first CRS is arranged every radio frame, the above-described second problem regarding the CRS is solved. Note that, in the following description, there is a case where the first CRS will be also referred to as a cell-specific beamformed CRS.

Note that it is assumed that the base station 100 which transmits the first synchronization signal is the same as the base station 100 which transmits the first CRS.

(3) PBCH

The base station 100 which transmits the first synchronization signal transmits two types of PBCHs including a first PBCH which is beamformed and a second PBCH which is not beamformed within one radio frame. The terminal apparatus 200 then performs reception processing of at least one of the two types of PBCHs including the first PBCH which is beamformed and the second PBCH which is not beamformed, transmitted within one frame. By this means, the terminal apparatus 200 which succeeds in receiving the first PBCH can receive an MIB even if the terminal apparatus 200 is located outside the coverage of the non-directional area.

<3.2. Subframe configuration>

(1) Outline

The base station 100 transmits the first synchronization signal and the second synchronization signal in different subframes. By this means, the first synchronization signal and the second synchronization signal are prevented from being transmitted in an overlapped manner, so that interference is prevented. Therefore, the terminal apparatus 200 can appropriately perform synchronization both in the case where the terminal apparatus 200 receives beams and in the case where the terminal apparatus 200 does not receive beams. Therefore, the above-described third problem is solved.

In the standard specifications, a transmission position of the second synchronization signal which is not beamformed is defined. For example, in the standard specifications, in the case where the communication scheme is FDD, a transmission position of the second synchronization signal is a subframe whose subframe number is 0 or 5. Therefore, in the case where the communication scheme is FDD, the base station 100 transmits the first synchronization signal in a subframe other than the subframe whose subframe number is 0 or 5. Further, in the standard specifications, in the case where the communication scheme is TDD, a transmission position of the second synchronization signal is a subframe whose subframe number is 0, 1, 5 or 6. Therefore, the base station 100 transmits the first synchronization signal in a subframe other than the subframe whose subframe number is 0, 1, 5 or 6 in the case where the communication scheme is TDD.

The above-described interference prevention technology is also effective for the CRS and the PBCH. That is, the base station 100 may transmit the first CRS and the second CRS in different subframes. Further, the base station 100 may transmit the first PBCH and the second PBCH in different subframes. By this means, the above-described third problem is solved in a similar manner also concerning the CRS and the PBCH.

For example, the base station 100 transmits the first synchronization signal, the first CRS and the first PBCH in arbitrary subframes. For example, the base station 100 which transmits the first synchronization signal, the first CRS and the first PBCH may transmit the first synchronization signal, the first CRS and the first PBCH in an MBSFN subframe of the base station 100 which transmits the second synchronization signal, the second CRS and the second PBCH. Meanwhile, the base station 100 which transmits the second synchronization signal, the second CRS and the second PBCH does not transmit signals (specifically, a PDCCH, a PDSCH, or the like) in the MBSFN subframe. By this means, the above-described transmission in different subframes is realized.

The base station which transmits the first CRS may make a notification of a subframe number of the subframe in which the first CRS is to be transmitted, that is, the subframe number set in the MBSFN subframe using system information (for example, an SIB). By this means, the terminal apparatus 200 located within the coverage of the directional area can receive the first CRS and can exclude the second CRS from a measurement target. This similarly applies to the first synchronization signal and the first PBCH. Note that, in the following description, information which is notified and which includes the subframe number of the subframe in which the first CRS is to be transmitted will be also referred to as a cell-specific beamformed CRS configuration.

Subsequently, a subframe configuration in the above-described first to third scenarios will be specifically described.

(2) First scenario

In the first scenario, the base station 100 which transmits the first synchronization signal, the first CRS and the first PBCH is a macro cell base station. Then, the base station 100 which transmits the first synchronization signal, the first CRS and the first PBCH is the same as the base station 100 which transmits the second synchronization signal, the second CRS and the second PBCH. That is, one macro cell base station 100 transmits the first synchronization signal, the first CRS, the first PBCH, and the second synchronization signal, the second CRS and the second PBCH.

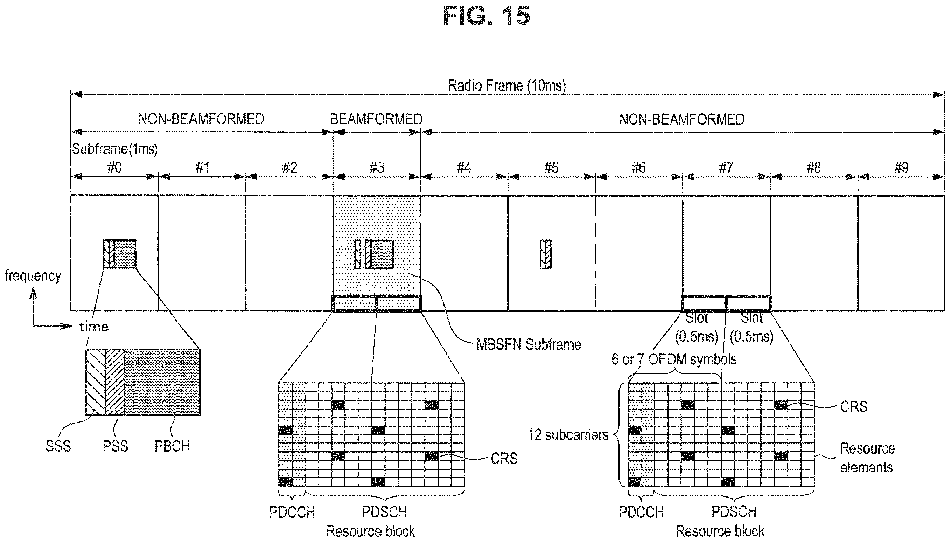

The first synchronization signal, the first CRS, the first PBCH, and the second synchronization signal, the second CRS and the second PBCH transmitted in the first scenario will be described below with reference to FIG. 15.

FIG. 15 is a diagram illustrating an example of a frame configuration of a downlink signal to be transmitted by the macro cell base station 100 according to the present embodiment in the first scenario. The frame configuration illustrated in FIG. 15 is a frame configuration in a case of FDD. As illustrated in FIG. 15, the synchronization signal is arranged in subframes #0 and #5, and the PBCH is arranged immediately after the synchronization signal in the subframe #0. Further, in a subframe in which the MBSFN is not arranged, the CRS is arranged. These subframes are transmitted without being beamformed. That is, in these subframes, the second synchronization signal, the second CRS and the second PBCH are transmitted.

Meanwhile, a subframe in which the MBSFN is arranged is multiplied by a cell-specific weighting matrix, and beamformed and transmitted. Then, in the subframe, the first synchronization signal, the first CRS and the first PBCH are transmitted. By this means, in the first scenario illustrated in FIG. 6, the terminal apparatus 200 which is located outside the coverage of the non-directional area of the macro cell and within the coverage of the directional area can receive the first synchronization signal, the first CRS and the first PBCH. Therefore, the terminal apparatus 200 can select the macro cell and perform communication.

As illustrated in FIG. 15, arrangement of the PSS and the SSS may be different between the first synchronization signal and the second synchronization signal. More specifically, in the first synchronization signal, the SSS may be arranged in symbols other than a symbol one symbol before or three symbols before the PSS. As illustrated in FIG. 15, in a case of FDD, concerning the second synchronization signal in the subframes #0 and #5, the SSS is arranged in a symbol one symbol before the PSS. Meanwhile, concerning the first synchronization signal in the subframe #3, the PSS is arranged in the last symbol in the first slot, and the SSS is arranged in a symbol two symbols before the PSS. Further, while not illustrated, in a case of TDD, concerning the second synchronization signal in the subframes #1 and #6, the PSS is transmitted in the third symbol, and the SSS is transmitted in a symbol three symbols before the PSS. Meanwhile, concerning the first synchronization signal, the SSS is arranged in a symbol, for example, four symbols before the PSS. The terminal apparatus 200 can know that the received synchronization signal is the first synchronization signal which is beamformed on the basis of such a difference in arrangement. Further, the terminal apparatus 200 can know that a subframe number of the received synchronization signal is neither the subframe #0 or #5 in FDD in related art nor the subframe #0, #1, #5 or #6 in TDD in related art.

Further, in the first synchronization signal, a symbol interval between the PSS and the SSS may be associated with the subframe number. By this means, for example, in the example illustrated in FIG. 15, the terminal apparatus 200 can recognize that the subframe number is 3 on the basis that the SSS is arranged in a symbol two symbols before the PSS.

Further, arrangement of the PSS and the SSS in the first synchronization signal may be different between FDD and TDD. In this case, the terminal apparatus 200 can recognize the communication scheme on the basis of the arrangement of the PSS and the SSS even if the terminal apparatus 200 is located outside the coverage of the non-directional area.

Further, subframes in which the first synchronization signal, the first CRS and the first PBCH are to be transmitted may be different for each beam. That is, a plurality of MBSFN subframes may be set, and beams including the first synchronization signal, the first CRS and the first PBCH may be transmitted for each MBSFN. By this means, it is possible to avoid interference between beams or between a beam and an adjacent cell, so that the above-described third problem is solved.

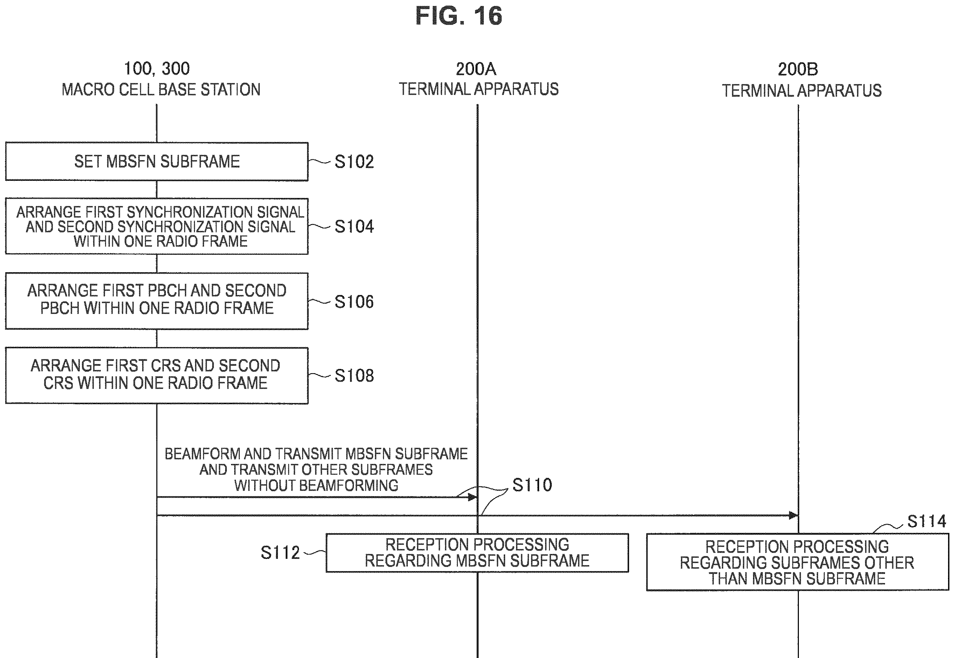

The technical features in the first scenario have been described above. Subsequently, processing flow in the first scenario will be described with reference to FIG. 16.

FIG. 16 is a sequence diagram illustrating an example of flow of communication processing executed in the system 1 according to the present embodiment. The macro cell base station 100, and the terminal apparatuses 200A and 200B are involved in the present sequence. Note that the macro cell base station 100 has a function as the communication control apparatus 300.

As illustrated in FIG. 16, first, the macro cell base station 100 sets an MBSFN subframe (step S102). The macro cell base station 100 then arranges the first synchronization signal and the second synchronization signal within one radio frame (step S104). Here, the first synchronization signal is arranged within the MBSFN subframe. The macro cell base station 100 then arranges the first PBCH and the second PBCH within one radio frame (step S106). Here, the first PBCH is arranged within the MBSFN subframe. The macro cell base station 100 then arranges the first CRS and the second CRS within one radio frame (step S108). Here, the first CRS is arranged within the MBSFN subframe. The macro cell base station 100 then beamforms and transmits the MBSFN subframe and transmits other subframes without beamforming the subframes (step S110).

It is assumed that the terminal apparatus 200A is located outside the coverage of the non-directional area of the macro cell and within the coverage of the directional area. In this case, the terminal apparatus 200A performs reception processing regarding the MBSFN subframe (step S112). Specifically, the terminal apparatus 200A detects the synchronization signal on beams, performs MIB reception and cell selection, and performs CRS synchronization, SIB reception and random access to start data communication with the macro cell. Meanwhile, it is assumed that the terminal apparatus 200B is located within the coverage of the non-directional area of the macro cell. In this case, the terminal apparatus 200B performs reception processing regarding subframes other than the MBSFN subframe (step S114). Specifically, the terminal apparatus 200B detects the synchronization signal, performs MIB reception and cell selection, and performs CRS synchronization, SIB reception and random access to start data communication with the macro cell. The processing is finished by the above processing.

(3) Second scenario

In the second scenario, the base station 100 which transmits the second synchronization signal, the second CRS and the second PBCH is a macro cell base station. Further, the base station 100 which transmits the first synchronization signal, the first CRS and the first PBCH is a small cell base station within the macro cell. That is, the base station 100 which transmits the first synchronization signal, the first CRS and the first PBCH is different from the base station 100 which transmits the second synchronization signal, the second CRS and the second PBCH.

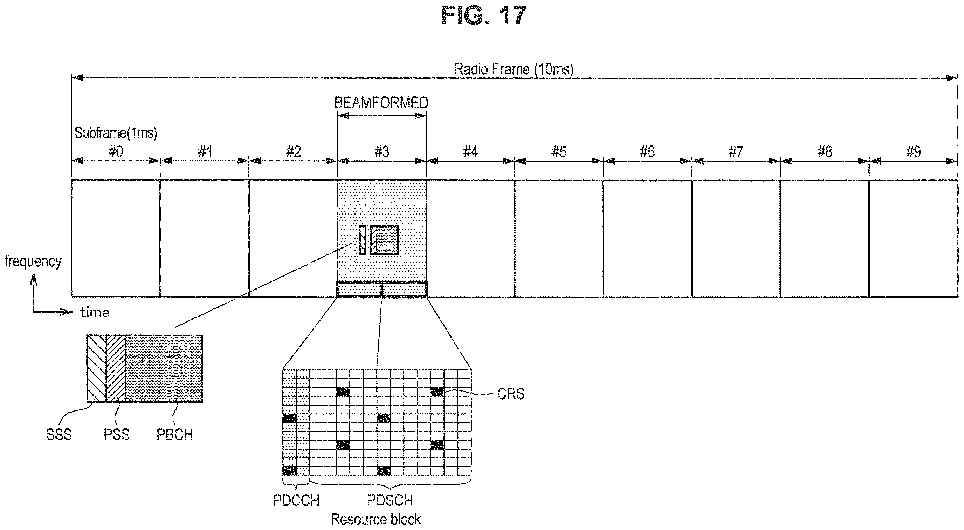

The first synchronization signal, the first CRS and the first PBCH, and the second synchronization signal, the second CRS and the second PBCH transmitted in the second scenario will be described below with reference to FIG. 17.

FIG. 17 is a diagram illustrating an example of a frame configuration of a downlink signal to be transmitted by the small base station 100 according to the present embodiment in the second scenario. The frame configuration illustrated in FIG. 17 is a frame configuration in a case of FDD. As illustrated in FIG. 17, a beamformed signal is transmitted in a subframe #3. That is, the small cell base station 100 multiplies the subframe #3 by a cell-specific weighting matrix and beamforms and transmits the subframe #3. Then, as illustrated in FIG. 17, in the subframe, the first synchronization signal, the first CRS and the first PBCH are transmitted. By this means, in the second scenario illustrated in FIG. 8, the terminal apparatus 200 which is located outside the coverage of the macro cell and within the coverage of the small cell can receive the first synchronization signal, the first CRS and the first PBCH. Therefore, the terminal apparatus 200 can select a small cell to perform communication.

Meanwhile, in subframes other than the subframe #3, signals are not transmitted. Concerning this, the macro cell base station 100 transmits a radio frame in which an MBSFN is arranged in the subframe #3 as illustrated in FIG. 3 without beamforming the radio frame. That is, the second synchronization signal, the second CRS and the second PBCH are transmitted from the macro cell base station 100, and the first synchronization signal, the first CRS and the first PBCH are transmitted from the small cell base station 100.

The communication control apparatus 300 sets an MBSFN subframe of the macro cell base station 100 and notifies the small cell base station 100 of information indicating the position of the MBSFN subframe. By this means, it is possible to cause the small cell base station 100 to transmit a signal in a subframe in which the macro cell base station 100 does not transmit a signal, so that it is possible to prevent interference. For example, in the case where the communication control apparatus 300 is provided at the macro cell base station 100, the macro cell base station 100 notifies the small cell base station 100 within the macro cell of information indicating a position (that is, number) of the MBSFN subframe using an X2 interface. Further, the communication control apparatus 300 may set a plurality of MBSFN subframes, and cause a plurality of small cell base stations 100 to transmit the first synchronization signal, the first CRS and the first PBCH. In this event, by the communication control apparatus 300 setting different MBSFN subframes to be used for each small cell base station 100, it is possible to prevent interference among the small cell base stations 100.

Technical features in the present scenario are similar to those in the first scenario as will be described below except that a transmission source of the first synchronization signal, the first CRS and the first PBCH is different from a transmission source of the second synchronization signal, the second CRS and the second PBCH.

For example, also in the second scenario, in a similar manner to the first scenario, arrangement of the PSS and the SSS may be different between the first synchronization signal and the second synchronization signal. More specifically, in the first synchronization signal, the SSS may be arranged in symbols other than a symbol one symbol before or three symbols before the PSS.

Further, in the first synchronization signal, a symbol interval between the PSS and the SSS may be associated with a subframe number.

Further, arrangement of the PSS and the SSS in the first synchronization signal may be different between FDD and TDD.

Further, subframes in which the first synchronization signal, the first CRS and the first PBCH are to be transmitted may be different for each beam.

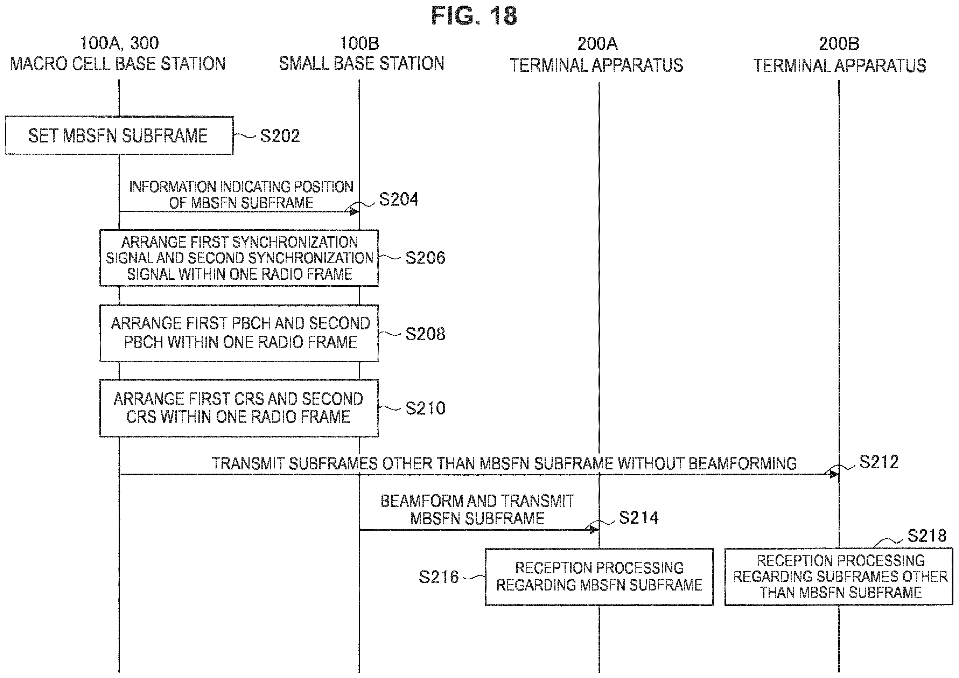

The technical features in the second scenario have been described above. Subsequently, processing flow in the second scenario will be described with reference to FIG. 18.

FIG. 18 is a sequence diagram illustrating an example of flow of communication processing executed in the system 1 according to the present embodiment. The macro cell base station 100A, the small cell base station 100B, and the terminal apparatuses 200A and 200B are involved in the present sequence. Note that it is assumed that the macro cell base station 100A has a function as the communication control apparatus 300.

As illustrated in FIG. 18, first, the macro cell base station 100A sets an MBSFN subframe (step S202). The macro cell base station 100A then transmits information indicating a position of the set MBSFN subframe to the small cell base station 100B (step S204). The macro cell base station 100A then arranges the second synchronization signal, and the small cell base station 100B arranges the first synchronization signal within one radio frame (step S206). Here, the first synchronization signal is arranged within the MBSFN subframe. The macro cell base station 100A then arranges the second PBCH, and the small cell base station 100B arranges the first PBCH within one radio frame (step S208). Here, the first PBCH is arranged within the MBSFN subframe. The macro cell base station 100A then arranges the second CRS, and the small cell base station 100B arranges the first CRS within one radio frame (step S210). Here, the first CRS is arranged within the MBSFN subframe. The macro cell base station 100A then transmits subframes other than the MBSFN subframe without beamforming the subframes (step S212). Further, the small cell base station 100B beamforms and transmits the MBSFN subframe (step S214).

It is assumed that the terminal apparatus 200A is located outside the coverage of the macro cell (that is, the non-directional area) and within the coverage of the small cell (that is, the directional area). In this case, the terminal apparatus 200A performs reception processing regarding the MBSFN subframe (step S216). Specifically, the terminal apparatus 200A detects the synchronization signal on beams, performs MIB reception and cell selection, and performs CRS synchronization, SIB reception and random access to start data communication with the small cell.

Meanwhile, it is assumed that the terminal apparatus 200B is located within the coverage of the macro cell. In this case, the terminal apparatus 200B performs reception processing regarding subframes other than the MBSFN subframe (step S218). Specifically, the terminal apparatus 200B detects the synchronization signal, performs MIB reception and cell selection, and performs CRS synchronization, SIB reception and random access to start data communication with the macro cell. The processing is finished by the above processing.

Note that, while, in the second scenario, description has been provided assuming that the macro cell base station provides the non-directional area, and the small cell base station provides the directional area, the present technology is not limited to such an example. For example, the small cell base station may provide the non-directional area, and the macro cell base station may provide the directional area. In this case, it is only necessary to read the macro cell in the above description as the small cell and read the small cell as the macro cell.

(4) Third scenario

In the third scenario, the base station 100 which transmits the first synchronization signal, the first CRS and the first PBCH is a small cell base station. The base station 100 which transmits the first synchronization signal, the first CRS and the first PBCH is the same as the base station 100 which transmits the second synchronization signal, the second CRS and the second PBCH. That is, one small cell base station 100 transmits the first synchronization signal, the first CRS and the first PBCH, and the second synchronization signal, the second CRS and the second PBCH.

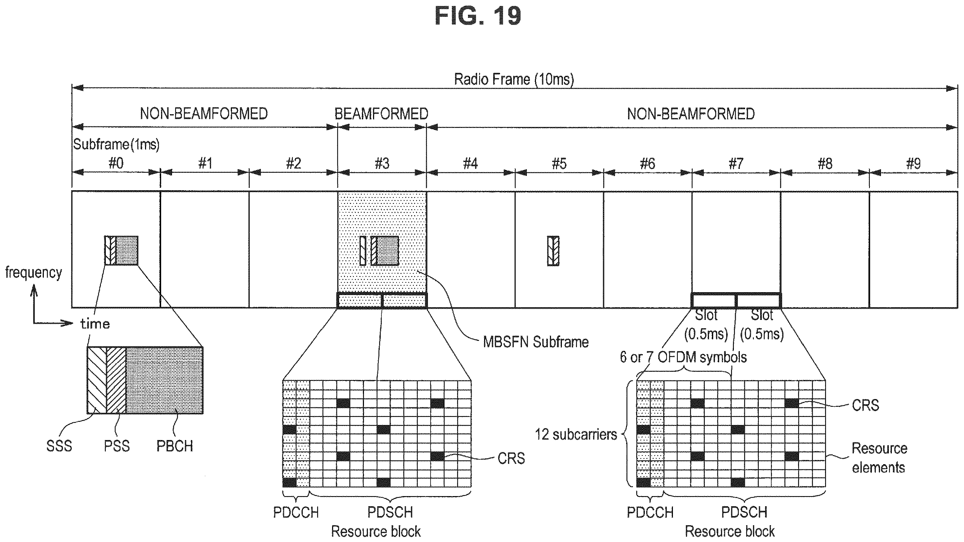

The first synchronization signal, the first CRS and the first PBCH, and the second synchronization signal, the second CRS and the second PBCH transmitted in the third scenario will be described below with reference to FIG. 19.

FIG. 19 is a diagram illustrating an example of a frame configuration of a downlink signal to be transmitted by the small cell base station 100 according to the present embodiment in the third scenario. The frame configuration illustrated in FIG. 19 is a frame configuration in a case of FDD. As illustrated in FIG. 19, the synchronization signal is arranged in the sub frames #0 and #5, and the PBCH is arranged immediately after the synchronization signal in the subframe #0. Further, the CRS is arranged in a subframe in which the MBSFN is not arranged. These subframes are transmitted without being beamformed. That is, in these subframes, the second synchronization signal, the second CRS and the second PBCH are transmitted.

Meanwhile, a subframe in which the MBSFN is arranged is multiplied by a cell-specific weighting matrix, and beamformed and transmitted. Then, in the subframe, the first synchronization signal, the first CRS and the first PBCH are transmitted. By this means, in the third scenario illustrated in FIG. 10, the terminal apparatus 200 which is located within the coverage of the directional area of the small cell and outside the coverage of the non-directional area of the macro cell and outside the coverage of the non-directional area of the small cell can receive the first synchronization signal, the first CRS and the first PBCH transmitted in the small cell. Therefore, the terminal apparatus 200 can select a small cell to perform communication.

The communication control apparatus 300 sets the MBSFN subframe and notifies the small cell base station 100 of information indicating a position of the MBSFN subframe. The communication control apparatus 300 may set a plurality of MBSFN subframes and cause a plurality of small cell base stations 100 to transmit the first synchronization signal, the first CRS and the first PBCH. In this event, by the communication control apparatus 300 setting different MBSFN subframes to be used for each small cell base station 100, it is possible to prevent interference among the small cell base stations 100.

Note that, in the present scenario, a carrier frequency is different between the macro cell and the small cell. Therefore, in the macro cell, the MBSFN subframe does not have to be set.

Technical features in the present scenario are similar to those in the first scenario as will be described below except that a transmission source of the first synchronization signal, the first CRS and the first PBCH, and the second synchronization signal, the second CRS and the second PBCH is the small cell base station.

For example, also in the third scenario, in a similar manner to the first scenario, arrangement of the PSS and the SSS may be different between the first synchronization signal and the second synchronization signal. More specifically, in the first synchronization signal, the SSS may be arranged in symbols other than a symbol one symbol before or three symbols before the PSS.

Further, in the first synchronization signal, a symbol interval between the PSS and the SSS may be associated with a subframe number.

Further, arrangement of the PSS and the SSS in the first synchronization signal may be different between FDD and TDD.

Further, subframes in which the first synchronization signal, the first CRS and the first PBCH are to be transmitted may be different for each beam.

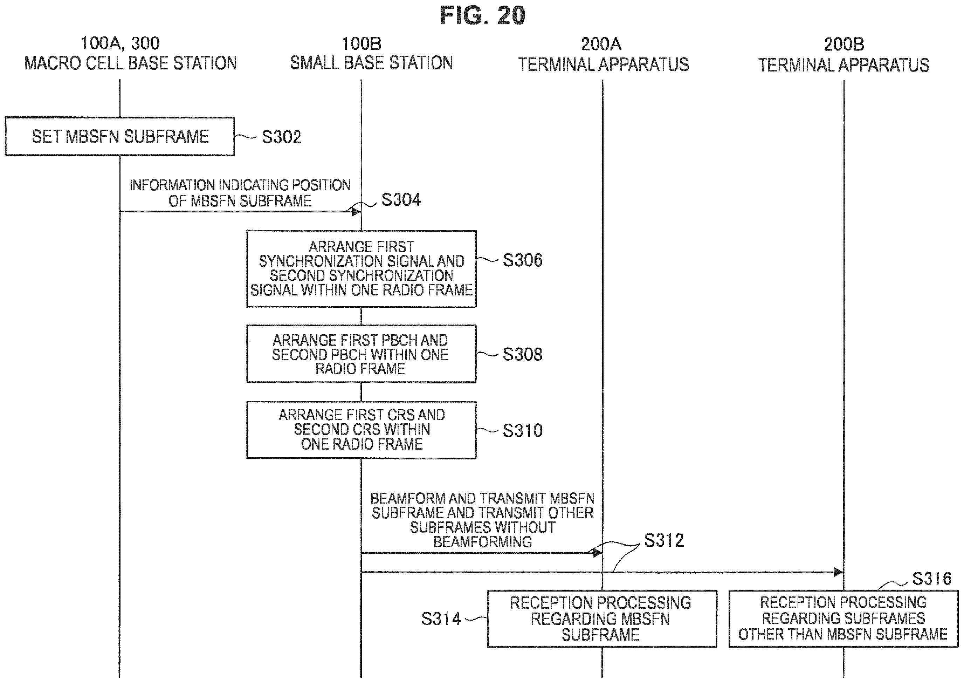

The technical features in the third scenario have been described above. Subsequently, processing flow in the third scenario will be described with reference to FIG. 20.

FIG. 20 is a sequence diagram illustrating an example of flow of communication processing executed in the system 1 according to the present embodiment. The macro cell base station 100A, the small cell base station B, and the terminal apparatuses 200A and 200B are involved in the present sequence. Note that it is assumed that the macro cell base station 100A has a function as the communication control apparatus 300.

As illustrated in FIG. 20, first, the macro cell base station 100 sets an MBSFN subframe (step S302). The macro cell base station 100A then transmits information indicating a position of the set MBSFN subframe to the small cell base station 100B (step S304). The small cell base station 100B then arranges the first synchronization signal and the second synchronization signal within one radio frame (step S306). Here, the first synchronization signal is arranged within the MBSFN subframe. The small cell base station 100B then arranges the first PBCH and the second PBCH within one radio frame (step S308). Here, the first PBCH is arranged within the MBSFN subframe. The small cell base station 100B then arranges the first CRS and the second CRS within one radio frame (step S310). Here, the first CRS is arranged within the MBSFN subframe. The small cell base station 100B then beamforms and transmits the MBSFN subframe and transmits other subframes without beamforming the subframes (step S312).

It is assumed that the terminal apparatus 200A is located within the coverage of the directional area of the small cell and outside the coverage of the non-directional area of the macro cell and outside the coverage of the non-directional area of the small cell. In this case, the terminal apparatus 200A performs reception processing regarding the MBSFN subframe (step S314). Specifically, the terminal apparatus 200A detects the synchronization signal on beams, performs MIB reception to perform cell selection, and performs CRS synchronization, SIB reception and random access to start data communication with the small cell. Meanwhile, it is assumed that the terminal apparatus 200B is located within the coverage of the non-directional area of the small cell. In this case, the terminal apparatus 200B performs reception processing regarding subframes other than the MBSFN subframe (step S316). Specifically, the terminal apparatus 200B detects the synchronization signal, performs MIB reception to perform cell selection, and performs CRS synchronization, SIB reception and random access to start data communication with the small cell. The processing is finished by the above processing.

<3.3. Handover>

(1) Outline

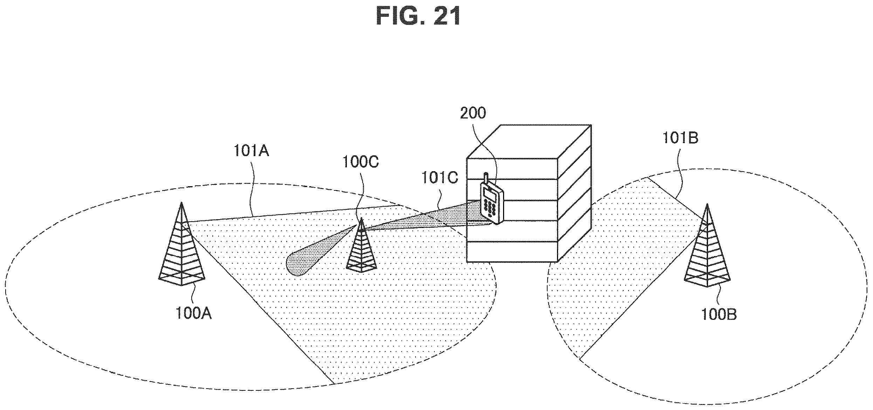

FIG. 21 is an explanatory diagram for explaining outline of technical features regarding handover according to the present embodiment. As illustrated in FIG. 21, the macro cell base station 100A provides a macro cell (non-directional area) 101A, and the small cell base station 100C within the macro cell 101A provides a small cell (directional area) 101C. A frequency of the macro cell 101A is F1, and a frequency of the small cell 101C is F2. Further, the macro cell base station 100B adjacent to the macro cell base station 100A provides a macro cell (non-directional area) 101B. The terminal apparatus 200 is located outside the coverage of the macro cell 101A and within the coverage of the small cell 101C. Therefore, the terminal apparatus 200 needs to achieve frame synchronization and frequency synchronization with the small cell separately from the macro cell to perform communication with the small cell.

It is assumed that the terminal apparatus 200 selects the macro cell as the PCell and performs data communication while reception strength of the second synchronization signal, the second PBCH and the second CRS transmitted from the macro cell base station 100A is weak. However, the terminal apparatus 200 can detect beams of the small cell to perform carrier aggregation as the SCell by receiving the first synchronization signal, the first PBCH and the first CRS transmitted from the small cell base station 100C. By this means, the terminal apparatus 200 can perform stable communication.

It should be noted here that a measurement report in related art does not include reception strength (for example, reference signal received power (RSRP) or reference signal received quality (RSRQ)) of the first CRS, and only includes reception strength of the second CRS. Therefore, while the terminal apparatus 200 can perform stable communication by performing carrier aggregation using beams of the small cell as the SCell, there is a possibility that the PCell hands over from the macro cell 101A to the macro cell 101B. Thereafter, there is also a possibility that the PCell hands over from the macro cell 101B to the macro cell 101C in a similar manner. To suppress such frequent handover of the PCell, it is preferable that handover conditions are eased in the case where beams can be received.

Therefore, the terminal apparatus 200 according to the present embodiment includes the reception strength of the first CRS in the measurement report. By this means, the macro cell base station 100A can determine handover (handover decision) while taking into account the reception strength of the first CRS, so that it is possible to suppress handover by easing the handover conditions in the above-described circumstances. The above-described transmission of the first CRS and the second CRS in different subframes also contributes to correct measurement of reception strength of each CRS, and contributes to ease of the handover conditions. In this manner, the above-described fourth problem is solved.

- Measurement configuration

The base station 100 notifies the terminal apparatus 200 which issues a radio resource control (RRC) connection request of the measurement configuration through RRC signaling.

The measurement configuration includes measurement objects, information indicating a triggering mechanism, reporting configurations, measurement identities, or the like. The measurement objects are information designating a measurement target. The information indicating the triggering mechanism is information indicating whether a reporting timing is event driven (A1 to A6) or expiry of a timer (periodic). The reporting configurations are information indicating designation of RSRP or RSRQ. The measurement identities are information which associates the measurement objects with the reporting configurations.

Particularly, in the present embodiment, the base station 100 can designate the first CRS as the measurement target in the measurement configuration. By this means, the terminal apparatus 200 can measure and report the first CRS. In the example illustrated in FIG. 21, the terminal apparatus 200 can report RSRP or RSRQ of the first CRS transmitted in the SCell in addition to RSRP or RSRQ of the second CRS transmitted in the PCell. The measurement configuration in which the first CRS is designated as the measurement target may be transmitted only to the terminal apparatus 200 supporting FD-MIMO.

(2) Measurement report

The terminal apparatus 200 measures reception strength of the first CRS and reports a measurement report including information indicating the measured reception strength of the first CRS. To realize this, the terminal apparatus 200 obtains a subframe in which the first CRS is to be transmitted from a cell-specific beamformed CRS configuration. A variety of triggering conditions of reporting can be considered. For example, triggering conditions can be that reception strength of the first CRS becomes greater than reception strength of the second CRS. The terminal apparatus 200 reports the measurement report to the base station 100 in the case where the triggering conditions are satisfied. The base station 100 can judge that it is appropriate to allocate beams to the PDSCH of the terminal apparatus 200 by the report from the terminal apparatus 200. After the judgement, the base station 100 may request a channel state report to the terminal apparatus 200 and specify an antenna port of beams to be allocated and a weighting matrix.

For example, the following six events specified in related art are used as triggering events.

- Event A1: Serving cell becomes better than a threshold
- Event A2: Serving cell becomes worse than a threshold
- Event A3: Neighbour cell becomes better than the serving cell by an offset
- Event A4: Neighbour cell becomes better than a threshold
- Event A5: Serving cell becomes worse than threshold 1 while neighboring cells becomes better than threshold 2
- Event A6: Neighbour cell becomes better than a secondary cell by an offset

A case where the event A3 is used will be described below as an example. In the event A3, reporting is triggered when a measurement value of an adjacent cell becomes greater than a value obtained by adding offset to a measurement value of a serving cell. An entering condition and a leaving condition of the event A3 are respectively defined with equation (1) and equation (2).

[Math. 1]

$$Mn + Ofn + Ocn - Hys > Mp + Ofp + Ocp + Off \qquad \cdots \; ( \; 1 \; )$$

[Math. 2]

$$Mn + Ofn + Ocn + Hys < Mp + Ofp + Ocp + Off \qquad \cdots \; ( \; 2 \; )$$

Here, Mn is a measurement value of an adjacent cell. In a case of the present embodiment, Mn indicates reception strength (RSRP or RSRQ) of the CRS to be transmitted by the adjacent cell. Ofn indicates an offset value specified by a frequency of the adjacent cell. Ocn indicates an offset value of the adjacent cell determined for each cell. Mp is a measurement value of the serving cell. In a case of the present embodiment, Mp indicates reception strength (RSRP or RSRQ) of the CRS of the serving cell. Ofp indicates an offset value specified by a frequency of the serving cell. Ocp indicates an offset value of the serving cell determined for each cell. Hys indicates a hysteresis of this event. Off indicates an offset parameter of this event. A unit of Mn and Mp is dBM in a case of RSRP and dB in a case of RSRQ. A unit of Ofn, Ocn, Ofp, Ocp, Hys and Off is dB.

The measurement report includes a measurement report ID, a measurement value of the serving cell, an adjacent cell ID, and a measurement value of the adjacent cell. In related art, the measurement value included in the measurement report is only reception strength of the second CRS. In contrast to this, in the present embodiment, in the case where the first CRS is designated as the measurement target in the measurement configuration, the measurement report includes reception strength of the first CRS. Therefore, the base station 100 can determine handover while taking into account the reception strength of the first CRS, so that it is possible to suppress handover.

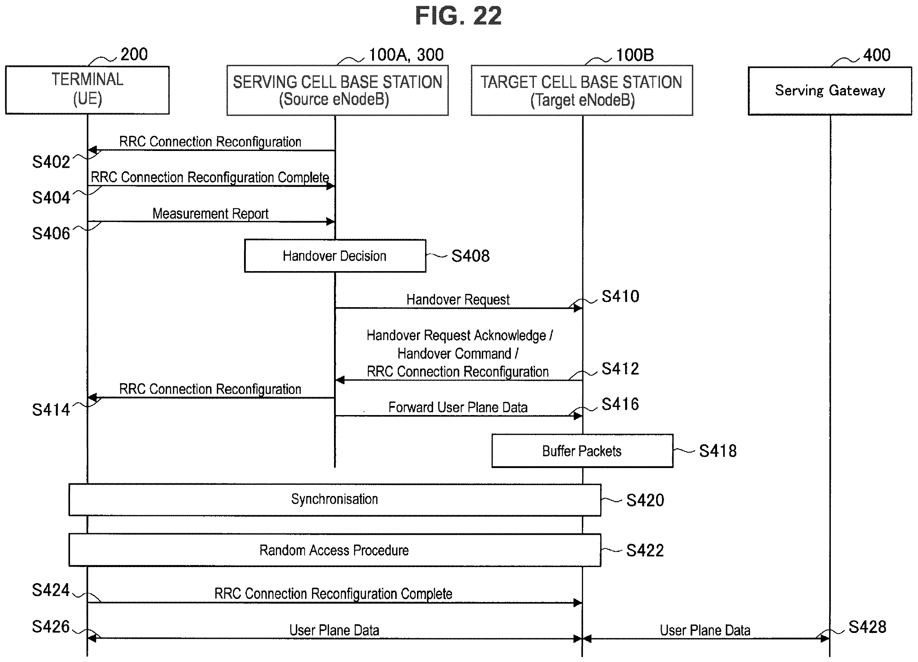

Technical features regarding handover have been described above. Subsequently, processing flow relating to handover procedure will be described with reference to FIG. 22.

(3) Processing flow

FIG. 22 is a sequence diagram of processing flow relating to handover procedure executed in the system 1 according to the present embodiment. The terminal apparatus 200, a serving cell base station 100A, a target cell base station 100B and a serving gateway 400 are involved in the present sequence. Note that, according to the example illustrated in FIG. 21, the serving cell base station 100A is a macro cell base station 100A, and the target base station 100B is a macro cell base station 100B. Further, the serving cell base station 100A has a function as the communication control apparatus 300.

As illustrated in FIG. 22, the serving cell base station 100A transmits RRC connection resetting to the terminal apparatus 200 (step S402). Then, the terminal apparatus 200 transmits RRC connection resetting completion to the serving cell base station 100A (step S404). The terminal apparatus 200 then transmits a measurement report including reception strength of the first CRS to the serving cell base station 100A in the case where the triggering conditions are satisfied (step S406). The serving cell base station 100A then determines handover while taking into account the reception strength of the first CRS (step S408). In the case where it is determined that handover is performed, the serving cell base station 100A transmits a handover request to the target cell base station 100B (step S410). The target cell base station 100B then transmits a handover request response, a handover command and RRC connection resetting to the serving cell base station 100A (step S412). The serving cell base station 100A then transmits RRC connection resetting to the terminal apparatus 200 (step S414). The serving cell base station 100A then forwards user plane data to the target cell base station 100B (step S416). The target cell base station 100B then buffers a packet (step S418). The terminal apparatus 200 then performs synchronization processing with the target cell base station 100B (step S420), performs random access procedure (step S422), and transmits RRC connection resetting completion to the target cell base station 100B (step S424). By this means, the terminal apparatus 200 can transmit/receive the user plane data to/from the serving gateway 400 via the target cell base station 100B (step S426, S428). The handover procedure is completed by the above processing.

«4. Application examples»

The technology according to the present disclosure can be applied to various products. For example, the communication control apparatus 300 may be realized as a server of any type of a tower server, a rack server and a blade server. Further, at least part of components of the communication control apparatus 300 may be realized at a module mounted on the server (for example, an integrated circuit module made up of one die or a card or a blade inserted into a slot of the blade server).

In addition, the base station 100 may also be implemented, for example, as any type of evolved Node B (eNB) such as macro eNBs and small eNBs. Small eNBs may be eNBs that cover smaller cells than the macrocells, such as pico eNBs, micro eNBs, or home (femto) eNBs. Instead, the base station 100 may be implemented as another type of base station such as Nodes B or base transceiver stations (BTSs). The base station 100 may include the main apparatus (which is also referred to as base station apparatus) that controls wireless communication and one or more remote radio heads (RRHs) that are disposed at different locations from that of the main apparatus. Also, various types of terminals described below may function as the base station 100 by temporarily or semi-permanently executing the functionality of the base station. Furthermore, at least some of structural elements of the base station 100 may be realized in a base station apparatus or a module for a base station apparatus.

Further, the terminal apparatus 200 may be implemented, for example, as a mobile terminal such as smartphones, tablet personal computers (PCs), notebook PCs, portable game terminals, portable/dongle mobile routers, and digital cameras, or an in-vehicle terminal such as car navigation apparatuses. Further, the terminal apparatus 200 may be implemented as a machine type communication (MTC) terminal for establishing a machine to machine (M2M) communication. Furthermore, at least some of structural elements of the terminal apparatus 200 may be implemented as a module (e.g., integrated circuit module including a single die) that is mounted on these terminals.

<4.1. Application example regarding communication control apparatus>

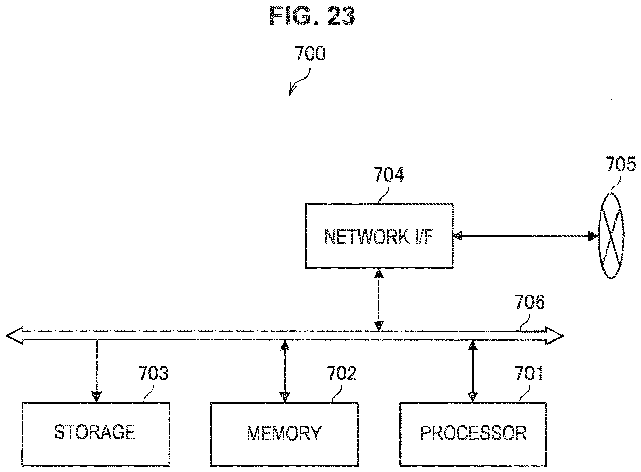

FIG. 23 is a block diagram illustrating an example of a schematic configuration of the server 700 to which the technology according to the present disclosure can be applied. The server 700 includes a processor 701, a memory 702, a storage 703, a network interface 704 and a bus 706.

The processor 701 may be, for example, a central processing unit (CPU) or a digital signal processor (DSP), and controls various kinds of functions of the server 700. The memory 702 includes a random access memory (RAM) and a read only memory (ROM), and stores programs to be executed by the processor 701 and data. The storage 703 can include a semiconductor memory or a storage medium such as a hard disk.

The network interface 704 is a wired communication interface for connecting the server 700 to a wired communication network 705. The wired communication network 705 may be a core network such as an evolved packet core (EPC) or may be a packet data network (PDN) such as the Internet.

The bus 706 interconnects the processor 701, the memory 702, the storage 703 and the network interface 704. The bus 706 may include two or more buses with different speed (for example, a high-speed bus and a low-speed bus).

In the server 700 illustrated in FIG. 23, one or more components (control unit 330) included in the communication control apparatus 300 described with reference to FIG. 14 may be realized at the processor 701. As an example, a program for causing the processor to function as the above-described one or more components (in other words, a program for causing the processor to execute operation of the above-described one or more components) may be installed in the server 700, and the processor 701 may execute the program. As another example, a module including the processor 701 and the memory 702 may be mounted on the server 700, and the above-described one or more components may be implemented at the modules. In this case, the above-described module causes the memory 702 to store a program for causing the processor to function as the above-described one or more components, and executes the program by the processor 701. As described above, the server 700 or the above-described module may be provided as an apparatus including the above-described one or more components, and the above-described program for causing the processor to function as the above-described one or more components may be provided. Further, a readable recording medium in which the above-described program is recorded may be provided.

Further, at the server 700 illustrated in FIG. 23, for example, the network communication unit 310 described with reference to FIG. 14 may be implemented at the network interface 704. Further, the storage unit 320 may be implemented at the memory 702 and/or the storage 703.

<4.2. Application examples for base station>

(First application example)

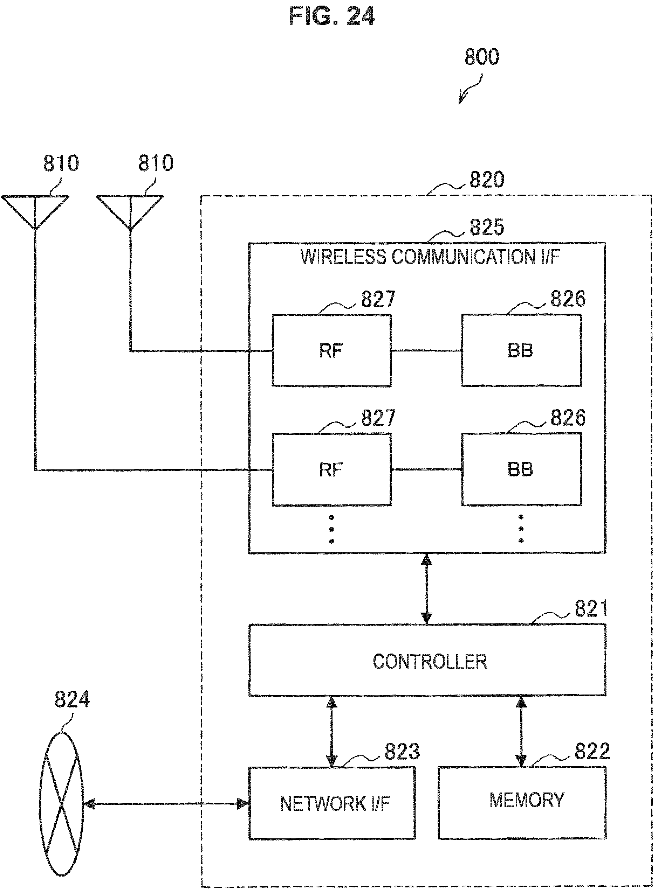

FIG. 24 is a block diagram illustrating a first example of a schematic configuration of an eNB to which the technology according to the present disclosure may be applied. An eNB 800 includes one or more antennas 810 and a base station apparatus 820. Each antenna 810 and the base station apparatus 820 may be connected to each other via an RF cable.

Each of the antennas 810 includes a single or a plurality of antenna elements (e.g., a plurality of antenna elements constituting a MIMO antenna) and is used for the base station apparatus 820 to transmit and receive a wireless signal. The eNB 800 may include the plurality of the antennas 810 as illustrated in FIG. 24, and the plurality of antennas 810 may, for example, correspond to a plurality of frequency bands used by the eNB 800. It should be noted that while FIG. 24 illustrates an example in which the eNB 800 includes the plurality of antennas 810, the eNB 800 may include the single antenna 810.

The base station apparatus 820 includes a controller 821, a memory 822, a network interface 823, and a wireless communication interface 825.

The controller 821 may be, for example, a CPU or a DSP, and operates various functions of an upper layer of the base station apparatus 820. For example, the controller 821 generates a data packet from data in a signal processed by the wireless communication interface 825, and transfers the generated packet via the network interface 823. The controller 821 may generate a bundled packet by bundling data from a plurality of baseband processors to transfer the generated bundled packet. Further, the controller 821 may also have a logical function of performing control such as radio resource control, radio bearer control, mobility management, admission control, and scheduling. Further, the control may be performed in cooperation with a surrounding eNB or a core network node. The memory 822 includes a RAM and a ROM, and stores a program executed by the controller 821 and a variety of control data (such as, for example, terminal list, transmission power data, and scheduling data).

The network interface 823 is a communication interface for connecting the base station apparatus 820 to the core network 824. The controller 821 may communicate with a core network node or another eNB via the network interface 823. In this case, the eNB 800 may be connected to a core network node or another eNB through a logical interface (e.g., S1 interface or X2 interface). The network interface 823 may be a wired communication interface or a wireless communication interface for wireless backhaul. In the case where the network interface 823 is a wireless communication interface, the network interface 823 may use a higher frequency band for wireless communication than a frequency band used by the wireless communication interface 825.

The wireless communication interface 825 supports a cellular communication system such as long term evolution (LTE) or LTE-Advanced, and provides wireless connection to a terminal located within the cell of the eNB 800 via the antenna 810. The wireless communication interface 825 may typically include a baseband (BB) processor 826, an RF circuit 827, and the like. The BB processor 826 may, for example, perform encoding/decoding, modulation/demodulation, multiplexing/demultiplexing, and the like, and performs a variety of signal processing on each layer (e.g., L1, medium access control (MAC), radio link control (RLC), and packet data convergence protocol (PDCP)). The BB processor 826 may have part or all of the logical functions as described above instead of the controller 821. The BB processor 826 may be a module including a memory having a communication control program stored therein, a processor to execute the program, and a related circuit, and the function of the BB processor 826 may be changeable by updating the program. Further, the module may be a card or blade to be inserted into a slot of the base station apparatus 820, or a chip mounted on the card or the blade. Meanwhile, the RF circuit 827 may include a mixer, a filter, an amplifier, and the like, and transmits and receives a wireless signal via the antenna 810.

The wireless communication interface 825 may include a plurality of the BB processors 826 as illustrated in FIG. 24, and the plurality of BB processors 826 may, for example, correspond to a plurality of frequency bands used by the eNB 800. Further, the wireless communication interface 825 may also include a plurality of the RF circuits 827, as illustrated in FIG. 24, and the plurality of RF circuits 827 may, for example, correspond to a plurality of antenna elements. Note that FIG. 24 illustrates an example in which the wireless communication interface 825 includes the plurality of BB processors 826 and the plurality of RF circuits 827, but the wireless communication interface 825 may include the single BB processor 826 or the single RF circuit 827.

In the eNB 800 illustrated in FIG. 24, one or more structural elements included in the base station 100 (the control unit 150) described with reference to FIG. 12 may be implemented by the wireless communication interface 825. Alternatively, at least some of these structural elements may be implemented by the controller 821. As an example, a module which includes a part (for example, the BB processor 826) or all of the wireless communication interface 825 and/or the controller 821 may be mounted in the eNB 800, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the eNB 800, and the wireless communication interface 825 (for example, the BB processor 826) and/or the controller 821 may execute the program. As described above, the eNB 800, the base station apparatus 820, or the module may be provided as an apparatus which includes the one or more structural elements, and the program for causing the processor to function as the one or more structural elements may be provided. In addition, a readable recording medium in which the program is recorded may be provided.

In addition, in the eNB 800 illustrated in FIG. 24, the wireless communication unit 120 described with reference to FIG. 12 may be implemented by the wireless communication interface 825 (for example, the RF circuit 827). Moreover, the antenna unit 110 may be implemented by the antenna 810. In addition, the network communication unit 130 may be implemented by the controller 821 and/or the network interface 823. Further, the storage unit 140 may be implemented by the memory 822.

(Second application example)

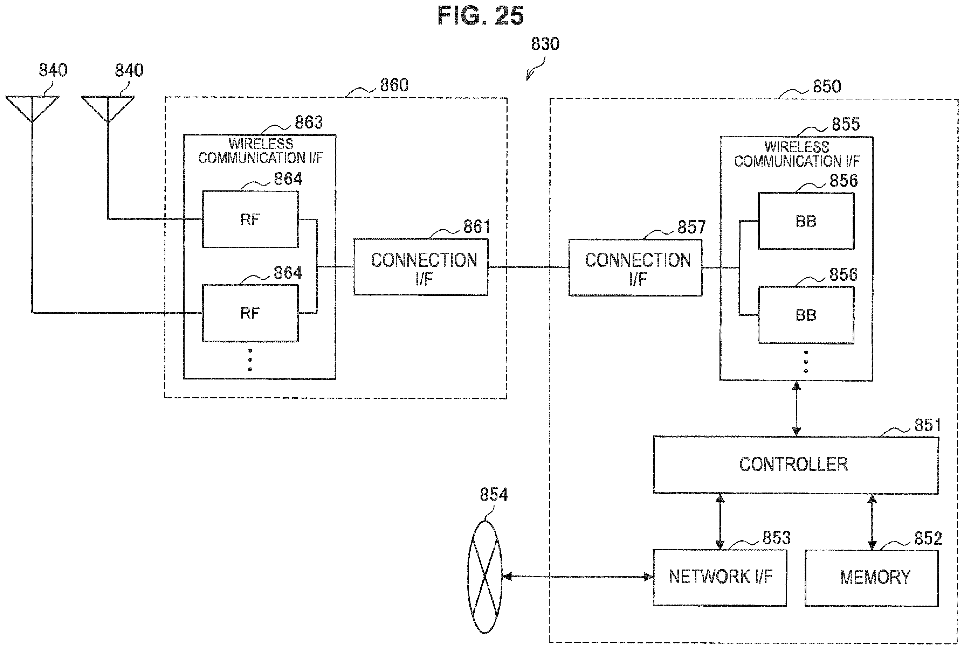

FIG. 25 is a block diagram illustrating a second example of a schematic configuration of an eNB to which the technology according to the present disclosure may be applied. An eNB 830 includes one or more antennas 840, a base station apparatus 850, and an RRH 860. Each of the antennas 840 and the RRH 860 may be connected to each other via an RF cable. Further, the base station apparatus 850 and the RRH 860 may be connected to each other by a high speed line such as optical fiber cables.

Each of the antennas 840 includes a single or a plurality of antenna elements (e.g., antenna elements constituting a MIMO antenna), and is used for the RRH 860 to transmit and receive a wireless signal. The eNB 830 may include a plurality of the antennas 840 as illustrated in FIG. 25, and the plurality of antennas 840 may, for example, correspond to a plurality of frequency bands used by the eNB 830. Note that FIG. 25 illustrates an example in which the eNB 830 includes the plurality of antennas 840, but the eNB 830 may include the single antenna 840.

The base station apparatus 850 includes a controller 851, a memory 852, a network interface 853, a wireless communication interface 855, and a connection interface 857. The controller 851, the memory 852, and the network interface 853 are similar to the controller 821, the memory 822, and the network interface 823 described with reference to FIG. 24.

The wireless communication interface 855 supports a cellular communication system such as LTE and LTE-Advanced, and provides wireless connection to a terminal located in a sector corresponding to the RRH 860 via the RRH 860 and the antenna 840. The wireless communication interface 855 may typically include a BB processor 856 or the like. The BB processor 856 is similar to the BB processor 826 described with reference to FIG. 24 except that the BB processor 856 is connected to an RF circuit 864 of the RRH 860 via the connection interface 857. The wireless communication interface 855 may include a plurality of the BB processors 856, as illustrated in FIG. 25, and the plurality of BB processors 856 may, for example, correspond to a plurality of frequency bands used by the eNB 830. Note that FIG. 25 illustrates an example in which the wireless communication interface 855 includes the plurality of BB processors 856, but the wireless communication interface 855 may include the single BB processor 856.

The connection interface 857 is an interface for connecting the base station apparatus 850 (wireless communication interface 855) to the RRH 860. The connection interface 857 may be a communication module for communication on the high speed line which connects the base station apparatus 850 (wireless communication interface 855) to the RRH 860.

Further, the RRH 860 includes a connection interface 861 and a wireless communication interface 863.

The connection interface 861 is an interface for connecting the RRH 860 (wireless communication interface 863) to the base station apparatus 850. The connection interface 861 may be a communication module for communication on the high speed line.

The wireless communication interface 863 transmits and receives a wireless signal via the antenna 840. The wireless communication interface 863 may typically include the RF circuit 864 or the like. The RF circuit 864 may include a mixer, a filter, an amplifier and the like, and transmits and receives a wireless signal via the antenna 840. The wireless communication interface 863 may include a plurality of the RF circuits 864 as illustrated in FIG. 25, and the plurality of RF circuits 864 may, for example, correspond to a plurality of antenna elements. Note that FIG. 25 illustrates an example in which the wireless communication interface 863 includes the plurality of RF circuits 864, but the wireless communication interface 863 may include the single RF circuit 864.

In the eNB 830 illustrated in FIG. 25, one or more structural elements included in the base station 100 (the control unit 150) described with reference to FIG. 12 may be implemented by the wireless communication interface 855 and/or the wireless communication interface 863. Alternatively, at least some of these structural elements may be implemented by the controller 851. As an example, a module which includes a part (for example, the BB processor 856) or all of the wireless communication interface 855 and/or the controller 851 may be mounted in the eNB 830, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the eNB 830, and the wireless communication interface 855 (for example, the BB processor 856) and/or the controller 851 may execute the program. As described above, the eNB 830, the base station apparatus 850, or the module may be provided as an apparatus which includes the one or more structural elements, and the program for causing the processor to function as the one or more structural elements may be provided. In addition, a readable recording medium in which the program is recorded may be provided.

In addition, in the eNB 830 illustrated in FIG. 25, for example, the wireless communication unit 120 described with reference to FIG. 12 may be implemented by the wireless communication interface 863 (for example, the RF circuit 864). Moreover, the antenna unit 110 may be implemented by the antenna 840. In addition, the network communication unit 130 may be implemented by the controller 851 and/or the network interface 853. Further, the storage unit 140 may be implemented by the memory 852.

<4.3. Application examples for terminal apparatus>

(First application example)

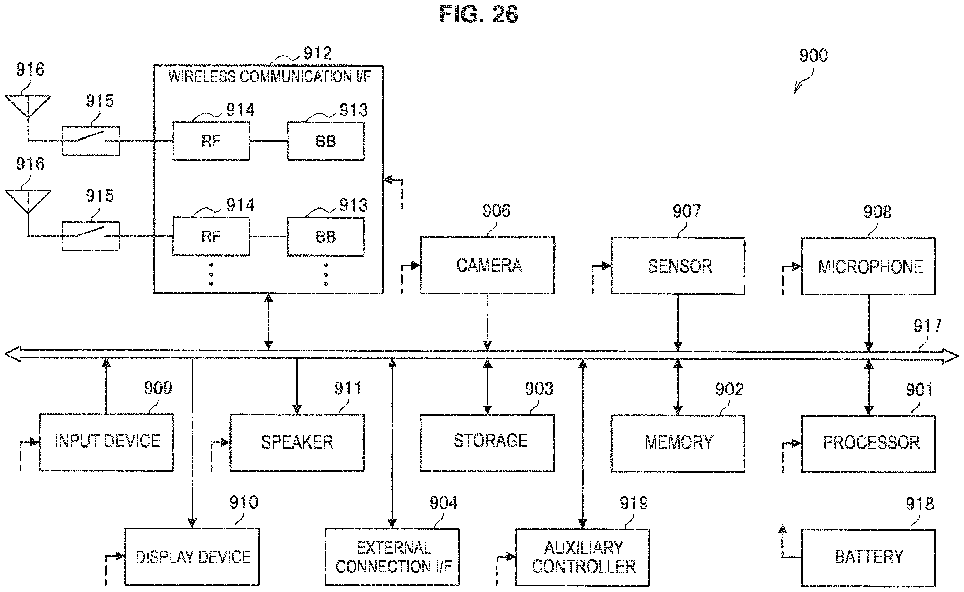

FIG. 26 is a block diagram illustrating an example of a schematic configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on chip (SoC), and controls the functions of an application layer and other layers of the smartphone 900. The memory 902 includes a RAM and a ROM, and stores a program executed by the processor 901 and data. The storage 903 may include a storage medium such as semiconductor memories and hard disks. The external connection interface 904 is an interface for connecting the smartphone 900 to an externally attached device such as memory cards and universal serial bus (USB) devices.

The camera 906 includes, for example, an image sensor such as charge coupled devices (CCDs) and complementary metal oxide semiconductor (CMOS), and generates a captured image. The sensor 907 may include a sensor group including, for example, a positioning sensor, a gyro sensor, a geomagnetic sensor, an acceleration sensor and the like. The microphone 908 converts a sound that is input into the smartphone 900 to an audio signal. The input device 909 includes, for example, a touch sensor which detects that a screen of the display device 910 is touched, a key pad, a keyboard, a button, a switch or the like, and accepts an operation or an information input from a user. The display device 910 includes a screen such as liquid crystal displays (LCDs) and organic light emitting diode (OLED) displays, and displays an output image of the smartphone 900. The speaker 911 converts the audio signal that is output from the smartphone 900 to a sound.

The wireless communication interface 912 supports a cellular communication system such as LTE or LTE-Advanced, and performs wireless communication. The wireless communication interface 912 may typically include the BB processor 913, the RF circuit 914, and the like. The BB processor 913 may, for example, perform encoding/decoding, modulation/demodulation, multiplexing/demultiplexing, and the like, and performs a variety of types of signal processing for wireless communication. On the other hand, the RF circuit 914 may include a mixer, a filter, an amplifier, and the like, and transmits and receives a wireless signal via the antenna 916. The wireless communication interface 912 may be a one-chip module in which the BB processor 913 and the RF circuit 914 are integrated. The wireless communication interface 912 may include a plurality of BB processors 913 and a plurality of RF circuits 914 as illustrated in FIG. 26. Note that FIG. 26 illustrates an example in which the wireless communication interface 912 includes a plurality of BB processors 913 and a plurality of RF circuits 914, but the wireless communication interface 912 may include a single BB processor 913 or a single RF circuit 914.

Further, the wireless communication interface 912 may support other types of wireless communication system such as a short range wireless communication system, a near field communication system, and a wireless local area network (LAN) system in addition to the cellular communication system, and in this case, the wireless communication interface 912 may include the BB processor 913 and the RF circuit 914 for each wireless communication system.

Each antenna switch 915 switches a connection destination of the antenna 916 among a plurality of circuits (for example, circuits for different wireless communication systems) included in the wireless communication interface 912.

Each of the antennas 916 includes one or more antenna elements (for example, a plurality of antenna elements constituting a MIMO antenna) and is used for transmission and reception of the wireless signal by the wireless communication interface 912. The smartphone 900 may include a plurality of antennas 916 as illustrated in FIG. 26. Note that FIG. 26 illustrates an example in which the smartphone 900 includes a plurality of antennas 916, but the smartphone 900 may include a single antenna 916.

Further, the smartphone 900 may include the antenna 916 for each wireless communication system. In this case, the antenna switch 915 may be omitted from a configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies electric power to each block of the smartphone 900 illustrated in FIG. 26 via a feeder line that is partially illustrated in the figure as a dashed line. The auxiliary controller 919, for example, operates a minimally necessary function of the smartphone 900 in a sleep mode.

In the smartphone 900 illustrated in FIG. 26, one or more structural elements included in the terminal apparatus 200 (the control unit 240) described with reference to FIG. 13 may be implemented by the wireless communication interface 912. Alternatively, at least some of these structural elements may be implemented by the processor 901 or the auxiliary controller 919. As an example, a module which includes a part (for example, the BB processor 913) or all of the wireless communication interface 912, the processor 901, and/or the auxiliary controller 919 may be mounted in the smartphone 900, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the smartphone 900, and the wireless communication interface 912 (for example, the BB processor 913), the processor 901, and/or the auxiliary controller 919 may execute the program. As described above, the smartphone 900 or the module may be provided as an apparatus which includes the one or more structural elements, and the program for causing the processor to function as the one or more structural elements may be provided. In addition, a readable recording medium in which the program is recorded may be provided.

In addition, in the smartphone 900 illustrated in FIG. 26, for example, the wireless communication unit 220 described with reference to FIG. 13 may be implemented by the wireless communication interface 912 (for example, the RF circuit 914). Moreover, the antenna unit 210 may be implemented by the antenna 916. Further, the storage unit 230 may be implemented by the memory 902.

(Second application example)

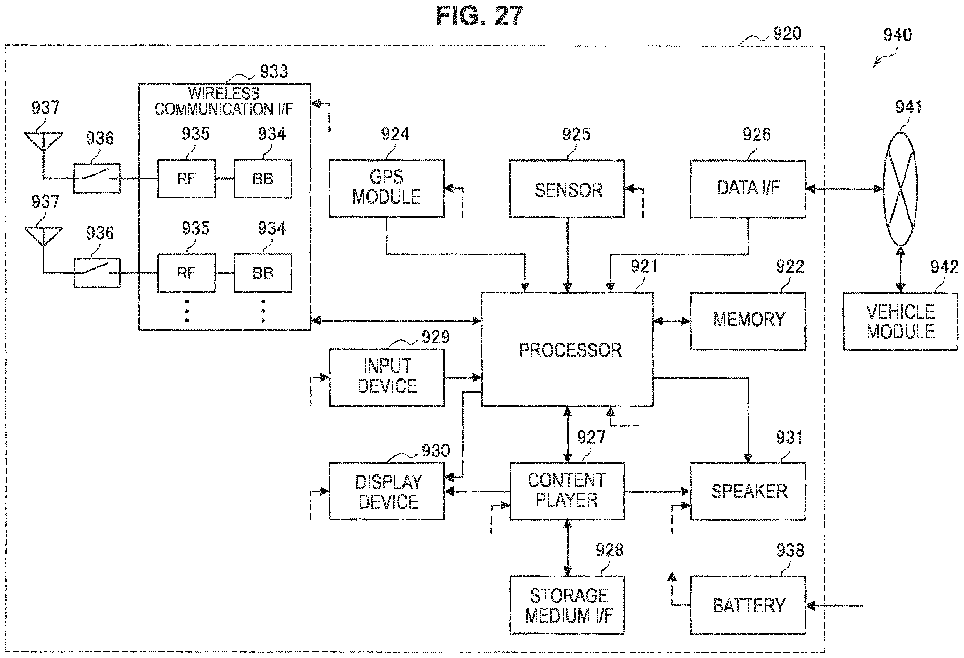

FIG. 27 is a block diagram illustrating an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls the navigation function and the other functions of the car navigation apparatus 920. The memory 922 includes a RAM and a ROM, and stores a program executed by the processor 921 and data.

The GPS module 924 uses a GPS signal received from a GPS satellite to measure the position (e.g., latitude, longitude, and altitude) of the car navigation apparatus 920. The sensor 925 may include a sensor group including, for example, a gyro sensor, a geomagnetic sensor, a barometric sensor and the like. The data interface 926 is, for example, connected to an in-vehicle network 941 via a terminal that is not illustrated, and acquires data such as vehicle speed data generated on the vehicle side.

The content player 927 reproduces content stored in a storage medium (e.g., CD or DVD) inserted into the storage medium interface 928. The input device 929 includes, for example, a touch sensor which detects that a screen of the display device 930 is touched, a button, a switch or the like, and accepts operation or information input from a user. The display device 930 includes a screen such as LCDs and OLED displays, and displays an image of the navigation function or the reproduced content. The speaker 931 outputs a sound of the navigation function or the reproduced content.

The wireless communication interface 933 supports a cellular communication system such as LTE or LTE-Advanced, and performs wireless communication. The wireless communication interface 933 may typically include the BB processor 934, the RF circuit 935, and the like. The BB processor 934 may, for example, perform encoding/decoding, modulation/demodulation, multiplexing/demultiplexing, and the like, and performs a variety of types of signal processing for wireless communication. On the other hand, the RF circuit 935 may include a mixer, a filter, an amplifier, and the like, and transmits and receives a wireless signal via the antenna 937. The wireless communication interface 933 may be a one-chip module in which the BB processor 934 and the RF circuit 935 are integrated. The wireless communication interface 933 may include a plurality of BB processors 934 and a plurality of RF circuits 935 as illustrated in FIG. 27. Note that FIG. 27 illustrates an example in which the wireless communication interface 933 includes a plurality of BB processors 934 and a plurality of RF circuits 935, but the wireless communication interface 933 may include a single BB processor 934 or a single RF circuit 935.

Further, the wireless communication interface 933 may support other types of wireless communication system such as a short range wireless communication system, a near field communication system, and a wireless LAN system in addition to the cellular communication system, and in this case, the wireless communication interface 933 may include the BB processor 934 and the RF circuit 935 for each wireless communication system.

Each antenna switch 936 switches a connection destination of the antenna 937 among a plurality of circuits (for example, circuits for different wireless communication systems) included in the wireless communication interface 933.

Each of the antennas 937 includes one or more antenna elements (for example, a plurality of antenna elements constituting a MIMO antenna) and is used for transmission and reception of the wireless signal by the wireless communication interface 933. The car navigation apparatus 920 may include a plurality of antennas 937 as illustrated in FIG. 27. Note that FIG. 27 illustrates an example in which the car navigation apparatus 920 includes a plurality of antennas 937, but the car navigation apparatus 920 may include a single antenna 937.

Further, the car navigation apparatus 920 may include the antenna 937 for each wireless communication system. In this case, the antenna switch 936 may be omitted from a configuration of the car navigation apparatus 920.

The battery 938 supplies electric power to each block of the car navigation apparatus 920 illustrated in FIG. 27 via a feeder line that is partially illustrated in the figure as a dashed line. Further, the battery 938 accumulates the electric power supplied from the vehicle.

In the car navigation apparatus 920 illustrated in FIG. 27, one or more structural elements included in the terminal apparatus 200 (the control unit 240) described with reference to FIG. 13 may be implemented by the wireless communication interface 933. Alternatively, at least some of these structural elements may be implemented by the processor 921. As an example, a module which includes a part (for example, the BB processor 934) or all of the wireless communication interface 933 and/or the processor 921 may be mounted in the car navigation apparatus 920, and the one or more structural elements may be implemented by the module. In this case, the module may store a program for causing the processor to function as the one or more structural elements (i.e., a program for causing the processor to execute operations of the one or more structural elements) and may execute the program. As another example, the program for causing the processor to function as the one or more structural elements may be installed in the car navigation apparatus 920, and the wireless communication interface 933 (for example, the BB processor 934) and/or the processor 921 may execute the program. As described above, the car navigation apparatus 920 or the module may be provided as an apparatus which includes the one or more structural elements, and the program for causing the processor to function as the one or more structural elements may be provided. In addition, a readable recording medium in which the program is recorded may be provided.

In addition, in the car navigation apparatus 920 illustrated in FIG. 27, for example, the wireless communication unit 220 described with reference to FIG. 13 may be implemented by the wireless communication interface 933 (for example, the RF circuit 935). Moreover, the antenna unit 210 may be implemented by the antenna 937. Further, the storage unit 230 may be implemented by the memory 922.

The technology of the present disclosure may also be realized as an in-vehicle system (or a vehicle) 940 including one or more blocks of the car navigation apparatus 920, the in-vehicle network 941, and a vehicle module 942. In other words, the in-vehicle system (or a vehicle) 940 may be provided as an apparatus which includes the control unit 240. The vehicle module 942 generates vehicle data such as vehicle speed, engine speed, and trouble information, and outputs the generated data to the in-vehicle network 941.

<<5. Conclusion>>

An embodiment of the present disclosure has been described in detail above with reference to FIG. 1 to FIG. 27. As described above, the base station 100 according to the present embodiment transmits two types of synchronization signals including the first synchronization signal which is beamformed and the second synchronization signal which is not beamformed within one radio frame alone or in cooperation with a plurality of base stations 100. By this means, the terminal apparatus 200 can receive a beam transmitted in the directional area even if the terminal apparatus 200 is located outside the coverage of the non-directional area. Further, because the first synchronization signal is arranged every radio frame, also the terminal apparatus 200 which moves at high speed can receive a sharp beam of FD-MIMO.

Further, the base station 100 according to the present embodiment transmits two types of CRSs including the first CRS which is beamformed and the second CRS which is not beamformed alone or in cooperation with a plurality of base stations 100. By this means, the terminal apparatus 200 can receive a beam transmitted in the directional area even if the terminal apparatus 200 is located outside the coverage of the non-directional area. Further, because the first CRS is arranged every radio frame, also the terminal apparatus 200 which moves at high speed can receive a sharp beam of FD-MIMO.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the processes described using the flowcharts and the sequence diagram in this specification need not be necessarily executed in the described order. Several process steps may be executed in parallel. Further, an additional process step may be employed, and some process steps may be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Reference Signs List

1       system
100     base station
110     antenna unit
120     wireless communication unit
130     network communication unit
140     storage unit
150     control unit
200     terminal apparatus
210     antenna unit
220     wireless communication unit
230     storage unit
240     control unit
300     communication control apparatus
310     network communication unit
320     storage unit
330     control unit

**Claims**

1. A communication control apparatus (300) comprising:
   a control unit (330) configured to

   - control one or more base stations (100) to transmit two types of synchronization signals including a first synchronization signal which is beamformed and a second synchronization signal which is not beamformed within one radio frame,
   - cause the first synchronization signal and the second synchronization signal to be transmitted in different subframes, and
   - cause the first synchronization signal to be transmitted in a subframe other than a sub-frame whose subframe number is 0 or 5, in a case where a communication scheme is frequency division duplex, FDD, or cause the first synchronization signal to be transmitted in a subframe other than a subframe whose subframe number is 0, 1, 5 or 6, in a case where a communication scheme is time division duplex, TDD.

2. The communication control apparatus according to claim 1,
   wherein the control unit (330) is configured to cause a first base station which transmits the first synchronization signal to transmit the first synchronization signal in an MBSFN subframe of a second base station which transmits the second synchronization signal and/or to make a subframe in which the first synchronization signal is transmitted different for each beam.

3. The communication control apparatus according to claim 1,
wherein the control unit (330) is configured to make arrangement of primary synchronization signals, PSS, and secondary synchronization signals, SSS, different between the first synchronization signal and the second synchronization signal.

4. The communication control apparatus according to claim 3,
wherein the control unit (330) is configured to arrange SSS in a symbol other than a symbol one symbol before or three symbols before PSS in the first synchronization signal and/or to make arrangement of PSS and SSS in the first synchronization signal different between FDD and TDD.

5. The communication control apparatus according to any preceding claim,
wherein the control unit (330) is configured to cause the base station which transmits the first synchronization signal to transmit a physical broadcast channel which is beamformed within the one radio frame.

6. The communication control apparatus according to any preceding claim,
wherein the base station which transmits the first synchronization signal is a macro cell base station or a small cell base station within a macro cell, and/or
wherein the base station which transmits the first synchronization signal is same as the base station which transmits the second synchronization signal or is different from the base station which transmits the second synchronization signal.

7. A communication control apparatus (300) comprising:
a control unit (330) configured to

- control one or more base stations (100) to transmit two types of cell-specific reference signals including a first cell-specific reference signal which is beamformed and a second cell-specific reference signal which is not beamformed within one radio frame, and
- cause the base station which transmits the first cell-specific reference signal to make a notification of a subframe number of a subframe in which the first cell-specific reference signal is transmitted, using system information, and cause the base station to designate the first cell-specific reference signal as a measurement target in a measurement configuration.

8. The communication control apparatus according to claim 7,
wherein the control unit (330) is configured to cause a first base station which transmits the first cell-specific reference signal to transmit the first cell-specific reference signal in an MBSFN subframe of a second base station which transmits the second cell-specific reference signal.

9. The communication control apparatus according to claim 7 or 8,
wherein the base station which transmits the first cell-specific reference signal is a macro cell base station or a small cell base station within a macro cell, and/or
wherein the base station which transmits the first cell-specific reference signal is same as the base station which transmits the second cell-specific reference signal or is different from the base station which transmits the second cell-specific reference signal.

10. A terminal apparatus (200) comprising:
a control unit (240) configured to perform reception processing of

- at least any of two types of cell-specific reference signals transmitted within one radio frame, the two types of cell-specific reference signals including a first cell-specific reference signal which is beamformed and a second cell-specific reference signal which is not beamformed, and
- a notification of a subframe number of a subframe in which the first cell-specific reference signal is transmitted, using system information, and a designation of the first cell-specific reference signal as a measurement target in a measurement configuration.

11. The terminal apparatus according to claim 10,
wherein the control unit (240) is configured to measure and report reception strength of the first cell-specific reference signal.

**12.** A method comprising:

controlling one or more base stations (100) to transmit two types of synchronization signals including a first synchronization signal which is beamformed and a second synchronization signal which is not beamformed within one radio frame,

causing the first synchronization signal and the second synchronization signal to be transmitted in different subframes, and

causing the first synchronization signal to be transmitted in a subframe other than a sub-frame whose subframe number is 0 or 5, in a case where a communication scheme is frequency division duplex, FDD, or cause the first synchronization signal to be transmitted in a subframe other than a subframe whose subframe number is 0, 1, 5 or 6, in a case where a communication scheme is time division duplex, TDD.

**13.** A method comprising:

controlling one or more base stations (100) to transmit two types of cell-specific reference signals including a first cell-specific reference signal which is beamformed and a second cell-specific reference signal which is not beamformed within one radio frame, and

causing the base station which transmits the first cell-specific reference signal to make a notification of a subframe number of a subframe in which the first cell-specific reference signal is transmitted, using system information, and cause the base station to designate the first cell-specific reference signal as a measurement target in a measurement configuration.

**14.** A method comprising:
performing reception processing of

- at least any of two types of cell-specific reference signals transmitted within one radio frame, the two types of cell-specific reference signals including a first cell-specific reference signal which is beamformed and a second cell-specific reference signal which is not beamformed, and
- a notification of a subframe number of a subframe in which the first cell-specific reference signal is transmitted, using system information, and a designation of the first cell-specific reference signal as a measurement target in a measurement configuration.

**15.** A program for causing a computer to function as a control unit configured to carry out the steps of the method defined in claims 12, 13 or 14 when said program is carried out by the computer.

**Patentansprüche**

**1.** Kommunikationssteuerungsvorrichtung (300), umfassend:
eine Steuereinheit (330), die für folgende Vorgänge ausgelegt ist:

Steuern einer oder mehrerer Basisstationen (100) zum Übertragen von zwei Arten von Synchronisationssignalen einschließlich eines ersten Synchronisationssignals, das strahlgeformt ist, und eines zweiten Synchronisationssignals, das nicht strahlgeformt ist, innerhalb eines Funkframes,

Veranlassen, dass das erste Synchronisationssignal und das zweite Synchronisationssignal in verschiedenen Subframes übertragen werden, und

Veranlassen, dass das erste Synchronisationssignal in einem anderen Subframe als einem Subframe mit der Subframenummer 0 oder 5 übertragen wird, wenn ein Kommunikationsschema Frequenzduplex, FDD, ist, oder Veranlassen, dass das erste Synchronisationssignal in einem anderen Subframe als einem Subframe mit der Subframenummer 0, 1, 5 oder 6 übertragen wird, wenn ein Kommunikationsschema Zeitduplex, TDD, ist.

**2.** Kommunikationssteuerungsvorrichtung nach Anspruch 1,
wobei die Steuereinheit (330) dafür ausgelegt ist, eine erste Basisstation, die das erste Synchronisationssignal überträgt, zu veranlassen, das erste Synchronisationssignal in einem MBSFN-Subframe einer zweiten Basisstation, die das zweite Synchronisationssignal überträgt, zu übertragen und/oder einen Subframe, in dem das erste Synchronisationssignal übertragen wird, für jeden Strahl verschieden zu machen.

**3.** Kommunikationssteuerungsvorrichtung nach Anspruch 1,

wobei die Steuereinheit (330) dafür ausgelegt ist, die Anordnung von primären Synchronisationssignalen, PSS, und sekundären Synchronisationssignalen, SSS, zwischen dem ersten Synchronisationssignal und dem zweiten Synchronisationssignal verschieden zu machen.

4.  Kommunikationssteuerungsvorrichtung nach Anspruch 3,
    wobei die Steuereinheit (330) dafür ausgelegt ist, SSS in einem anderen Symbol als einem Symbol, das sich ein Symbol vor oder drei Symbole vor PSS im ersten Synchronisationssignal befindet, anzuordnen und/oder die Anordnung von PSS und SSS im ersten Synchronisationssignal zwischen FDD und TDD verschieden zu machen.

5.  Kommunikationssteuerungsvorrichtung nach einem der vorhergehenden Ansprüche,
    wobei die Steuereinheit (330) dafür ausgelegt ist, die Basisstation, die das erste Synchronisationssignal überträgt, zu veranlassen, innerhalb des einen Funkframes einen "Physical Broadcast Channel" zu übertragen, der strahlgeformt ist.

6.  Kommunikationssteuerungsvorrichtung nach einem der vorhergehenden Ansprüche,
    wobei die Basisstation, die das erste Synchronisationssignal überträgt, eine Makrozellen-Basisstation oder eine Kleinzellen-Basisstation innerhalb einer Makrozelle ist, und/oder wobei die Basisstation, die das erste Synchronisationssignal überträgt, die gleiche ist wie die Basisstation, die das zweite Synchronisationssignal überträgt, oder sich von der Basisstation unterscheidet, die das zweite Synchronisationssignal überträgt.

7.  Kommunikationssteuerungsvorrichtung (300), umfassend:
    eine Steuereinheit (330), die für folgende Vorgänge ausgelegt ist:

    Steuern einer oder mehrerer Basisstationen (100) zum Übertragen von zwei Arten von zellspezifischen Referenzsignalen einschließlich eines ersten zellspezifischen Referenzsignals, das strahlgeformt ist, und eines zweiten zellspezifischen Referenzsignals, das nicht strahlgeformt ist, innerhalb eines Funkframes, und
    Veranlassen der Basisstation, die das erste zellspezifische Referenzsignal überträgt, eine Benachrichtigung über eine Subframenummer eines Subframes vorzunehmen, in dem das erste zellspezifische Referenzsignal übertragen wird, unter Verwendung von Systeminformationen, und Veranlassen der Basisstation, das erste zellspezifische Referenzsignal als ein Messziel in einer Messauslegung zu kennzeichnen.

8.  Kommunikationssteuerungsvorrichtung nach Anspruch 7,
    wobei die Steuereinheit (330) dafür ausgelegt ist, eine erste Basisstation, die das erste zellspezifische Referenzsignal überträgt, zu veranlassen, das erste zellspezifische Referenzsignal in einem MBSFN-Subframe einer zweiten Basisstation, die das zweite zellspezifische Referenzsignal überträgt, zu übertragen.

9.  Kommunikationssteuerungsvorrichtung nach Anspruch 7 oder 8,
    wobei die Basisstation, die das erste zellspezifische Referenzsignal überträgt, eine Makrozellen-Basisstation oder eine Kleinzellen-Basisstation innerhalb einer Makrozelle ist, und/oder
    wobei die Basisstation, die das erste zellspezifische Referenzsignal überträgt, die gleiche ist wie die Basisstation, die das zweite zellspezifische Referenzsignal überträgt, oder sich von der Basisstation unterscheidet, die das zweite zellspezifische Referenzsignal überträgt.

10. Endgerät (200), umfassend:
    eine Steuereinheit (240), die dafür ausgelegt ist, Empfangsverarbeitung der folgenden Elemente durchzuführen:

    mindestens einer beliebigen von zwei Arten von zellspezifischen Referenzsignalen, die innerhalb eines Funkframes übertragen werden, wobei die zwei Arten von zellspezifischen Referenzsignalen ein erstes zellspezifisches Referenzsignal, das strahlgeformt ist, und ein zweites zellspezifisches Referenzsignal, das nicht strahlgeformt ist, beinhalten, und
    einer Benachrichtigung über eine Subframenummer eines Subframes, in dem das erste zellspezifische Referenzsignal übertragen wird, unter Verwendung von Systeminformationen, und einer Kennzeichnung des ersten zellspezifischen Referenzsignals als ein Messziel in einer Messauslegung.

11. Endgerät nach Anspruch 10,
    wobei die Steuereinheit (240) dafür ausgelegt ist, die Empfangsstärke des ersten zellspezifischen Referenzsignals zu messen und zu melden.

**12.** Verfahren, umfassend:

Steuern einer oder mehrerer Basisstationen (100) zum Übertragen von zwei Arten von Synchronisationssignalen einschließlich eines ersten Synchronisationssignals, das strahlgeformt ist, und eines zweiten Synchronisationssignals, das nicht strahlgeformt ist, innerhalb eines Funkframes,
Veranlassen, dass das erste Synchronisationssignal und das zweite Synchronisationssignal in verschiedenen Subframes übertragen werden, und
Veranlassen, dass das erste Synchronisationssignal in einem anderen Subframe als einem Subframe mit der Subframenummer 0 oder 5 übertragen wird, wenn ein Kommunikationsschema Frequenzduplex, FDD, ist, oder
Veranlassen, dass das erste Synchronisationssignal in einem anderen Subframe als einem Subframe mit der Subframenummer 0, 1, 5 oder 6 übertragen wird, wenn ein Kommunikationsschema Zeitduplex, TDD, ist.

**13.** Verfahren, umfassend:

Steuern einer oder mehrerer Basisstationen (100) zum Übertragen von zwei Arten von zellspezifischen Referenzsignalen einschließlich eines ersten zellspezifischen Referenzsignals, das strahlgeformt ist, und eines zweiten zellspezifischen Referenzsignals, das nicht strahlgeformt ist, innerhalb eines Funkframes, und
Veranlassen der Basisstation, die das erste zellspezifische Referenzsignal überträgt, eine Benachrichtigung über eine Subframenummer eines Subframes vorzunehmen, in dem das erste zellspezifische Referenzsignal übertragen wird, unter Verwendung von Systeminformationen, und Veranlassen der Basisstation, das erste zellspezifische Referenzsignal als ein Messziel in einer Messauslegung zu kennzeichnen.

**14.** Verfahren, umfassend:
Durchführen von Empfangsverarbeitung von:

mindestens einer beliebigen von zwei Arten von zellspezifischen Referenzsignalen, die innerhalb eines Funkframes übertragen werden, wobei die zwei Arten von zellspezifischen Referenzsignalen ein erstes zellspezifisches Referenzsignal, das strahlgeformt ist, und ein zweites zellspezifisches Referenzsignal, das nicht strahlgeformt ist, beinhalten, und
einer Benachrichtigung über eine Subframenummer eines Subframes, in dem das erste zellspezifische Referenzsignal übertragen wird, unter Verwendung von Systeminformationen, und einer Kennzeichnung des ersten zellspezifischen Referenzsignals als ein Messziel in einer Messauslegung.

**15.** Programm zum Veranlassen eines Computers, bei Ausführung des Programms durch den Computer als eine Steuereinheit zu funktionieren, die dafür ausgelegt ist, die Schritte des in den Ansprüchen 12, 13 oder 14 definierten Verfahrens durchzuführen.

**Revendications**

**1.** Appareil de commande de communication (300) comprenant : une unité de commande (330) configurée pour

- commander une ou plusieurs stations de base (100) pour transmettre deux types de signaux de synchronisation, comprenant un premier signal de synchronisation qui est mis en forme de faisceau et un second signal de synchronisation qui n'est pas mis en forme de faisceau dans une trame radio,
- amener le premier signal de synchronisation et le second signal de synchronisation à être transmis dans des sous-trames différentes, et
- amener le premier signal de synchronisation à être transmis dans une sous-trame autre qu'une sous-trame dont le numéro de sous-trame est 0 ou 5, dans un cas où un schéma de communication est un duplexage par répartition en fréquence, FDD, ou amener le premier signal de synchronisation à être transmis dans une sous-trame autre qu'une sous-trame dont le numéro de sous-trame est 0, 1, 5 ou 6, dans un cas où un schéma de communication est un duplexage par répartition temporelle, TDD.

**2.** Appareil de commande de communication selon la revendication 1,
l'unité de commande (330) étant configurée pour amener une première station de base qui transmet le premier signal de synchronisation, à transmettre le premier signal de synchronisation dans une sous-trame MBSFN d'une seconde station de base qui transmet le second signal de synchronisation et/ou pour rendre une sous-trame dans laquelle le premier signal de synchronisation est transmis différente pour chaque faisceau.

**3.** Appareil de commande de communication selon la revendication 1,
l'unité de commande (330) étant configurée pour rendre l'agencement de signaux de synchronisation primaires, PSS, et de signaux de synchronisation secondaires, SSS, différent entre le premier signal de synchronisation et le second signal de synchronisation.

**4.** Appareil de commande de communication selon la revendication 3,
l'unité de commande (330) étant configurée pour agencer des SSS dans un symbole autre qu'un symbole un symbole avant ou trois symboles avant le PSS dans le premier signal de synchronisation et/ou pour rendre l'agencement des PSS et des SSS dans le premier signal de synchronisation différent entre le FDD et le TDD.

**5.** Appareil de commande de communication selon l'une quelconque des revendications précédentes,
l'unité de commande (330) étant configurée pour amener la station de base qui transmet le premier signal de synchronisation à transmettre un canal de diffusion physique qui est mis en forme de faisceau dans la trame radio.

**6.** Appareil de commande de communication selon l'une quelconque des revendications précédentes,
la station de base qui transmet le premier signal de synchronisation étant une station de base à macrocellule ou une station de base à petite cellule à l'intérieur d'une macrocellule, et/ou
la station de base qui transmet le premier signal de synchronisation étant la même que la station de base qui transmet le second signal de synchronisation ou étant différente de la station de base qui transmet le second signal de synchronisation.

**7.** Appareil de commande de communication (300) comprenant :
une unité de commande (330) configurée pour

- commander une ou plusieurs stations de base (100) afin de transmettre deux types de signaux de référence spécifiques aux cellules, dont un premier signal de référence spécifique à la cellule qui est mis en forme de faisceau et un second signal de référence spécifique à la cellule qui n'est pas mis en forme de faisceau dans une trame radio, et
- amener la station de base qui transmet le premier signal de référence spécifique à la cellule à procéder à la notification du numéro de sous-trame d'une sous-trame dans laquelle le premier signal de référence spécifique à la cellule est transmis, en utilisant des informations de système, et amener la station de base à désigner le premier signal de référence spécifique à la cellule comme cible de mesure dans une configuration de mesure.

**8.** Appareil de commande de communication selon la revendication 7,
l'unité de commande (330) étant configurée pour amener une première station de base qui transmet le premier signal de référence spécifique à la cellule à transmettre le premier signal de référence spécifique à la cellule dans une sous-trame MBSFN d'une seconde station de base qui transmet le second signal de référence spécifique à la cellule.

**9.** Appareil de commande de communication selon la revendication 7 ou 8,
la station de base qui transmet le premier signal de référence spécifique à la cellule étant une station de base de macrocellule ou une station de base de petite cellule à l'intérieur d'une macrocellule, et/ou la station de base qui transmet le premier signal de référence spécifique à la cellule étant identique à la station de base qui transmet le second signal de référence spécifique à la cellule ou étant différente de la station de base qui transmet le second signal de référence spécifique à la cellule.

**10.** Appareil terminal (200) comprenant :
une unité de commande (240) configurée pour réaliser le traitement de réception de

- au moins n'importe lequel de deux types de signaux de référence spécifiques à la cellule transmis dans une trame radio, les deux types de signaux de référence spécifiques à la cellule comprenant un premier signal de référence spécifique à la cellule qui est mis en forme de faisceau et un second signal de référence spécifique à la cellule qui n'est pas mis en forme de faisceau, et
- une notification d'un numéro de sous-trame d'une sous-trame dans laquelle le premier signal de référence spécifique à la cellule est transmis, en utilisant des informations de système, et une désignation du premier signal de référence spécifique à la cellule comme cible de mesure dans une configuration de mesure.

**11.** Appareil terminal selon la revendication 10, l'unité de commande (240) étant configurée pour mesurer et signaler la puissance de réception du premier signal de référence spécifique à la cellule.

**12.** Procédé comprenant :

la commande d'une ou plusieurs stations de base (100) pour transmettre deux types de signaux de synchronisation, comprenant un premier signal de synchronisation qui est mis en forme de faisceau et un second signal de synchronisation qui n'est pas mis en forme de faisceau dans une trame radio,
le fait d'amener le premier signal de synchronisation et le second signal de synchronisation à être transmis dans des sous-trames différentes, et
le fait d'amener le premier signal de synchronisation à être transmis dans une sous-trame autre qu'une sous-trame dont le numéro de sous-trame est 0 ou 5, dans un cas où un schéma de communication est un duplexage par répartition en fréquence, FDD, ou le fait d'amener le premier signal de synchronisation à être transmis dans une sous-trame autre qu'une sous-trame dont le numéro de sous-trame est 0, 1, 5 ou 6, dans un cas où un schéma de communication est un duplexage par répartition temporelle, TDD.

**13.** Procédé comprenant :

la commande d'une ou de plusieurs stations de base (100) pour transmettre deux types de signaux de référence spécifiques à la cellule, comprenant un premier signal de référence spécifique à la cellule qui est mis en forme de faisceau et un second signal de référence spécifique à la cellule qui n'est pas mis en forme de faisceau dans une trame radio, et
le fait d'amener la station de base qui transmet le premier signal de référence spécifique à la cellule à procéder à la notification du numéro de sous-trame d'une sous-trame dans laquelle le premier signal de référence spécifique à la cellule est transmis, en utilisant des informations de système, et le fait d'amener la station de base à désigner le premier signal de référence spécifique à la cellule comme cible de mesure dans une configuration de mesure.

**14.** Procédé comprenant :
la réalisation d'un traitement de réception de

- au moins l'un des deux types de signaux de référence spécifiques à la cellule transmis dans une trame radio, les deux types de signaux de référence spécifiques à la cellule comprenant un premier signal de référence spécifique à la cellule qui est mis en forme de faisceau et un second signal de référence spécifique à la cellule qui n'est pas mis en forme de faisceau, et
- une notification d'un numéro de sous-trame d'une sous-trame dans laquelle le premier signal de référence spécifique à la cellule est transmis, en utilisant des informations de système, et une désignation du premier signal de référence spécifique à la cellule comme cible de mesure dans une configuration de mesure.

**15.** Programme permettant d'amener un ordinateur à fonctionner comme une unité de commande configurée pour réaliser les étapes du procédé selon les revendications 12, 13 ou 14 lorsque ledit programme est réalisé par l'ordinateur.

# FIG. 1

eNB

UE

Cell

→ FD-MIMO BEAM

# FIG. 2

**FIG. 3**

Radio Frame (10ms)

Subframe(1ms)

| #0 | #1 | #2 | #3 | #4 | #5 | #6 | #7 | #8 | #9 |

frequency

time

MBSFN Subframe

Slot (0.5ms)  Slot (0.5ms)

6 or 7 OFDM symbols

12 subcarriers

SSS  PSS  PBCH

PDCCH  PDSCH

Resource block

CRS

Resource elements

EP 3 442 142 B1

# FIG. 4

1 Resource Block

12subcarriers — Subframe — CRS

# FIG. 5

MACRO CELL eNB(F1)

DIRECTIONAL AREA

UE

NON-DIRECTIONAL AREA

# FIG. 6

UE

MACRO CELL
eNB(F1)

DIRECTIONAL
AREA

NON-DIRECTIONAL
AREA

# FIG. 7

MACRO CELL
eNB(F1)

SMALL CELL
eNB(F1)

DIRECTIONAL
AREA

UE

NON-DIRECTIONAL
AREA

# FIG. 8

MACRO CELL
eNB(F1)

SMALL CELL
eNB(F1)

DIRECTIONAL
AREA

UE

NON-DIRECTIONAL
AREA

# FIG. 9

MACRO CELL
eNB(F1)

SMALL CELL
eNB(F2)

DIRECTIONAL
AREA

UE

NON-DIRECTIONAL AREA

37

# FIG. 10

MACRO CELL
eNB(F1)

SMALL CELL
eNB(F2)

DIRECTIONAL
AREA

UE

NON-DIRECTIONAL AREA

# FIG. 11

300

101A

100A

100C

100B

200

101C

101B

# FIG. 12

110

120
WIRELESS
COMMUNICATION
UNIT

130
NETWORK
COMMUNICATION
UNIT

140
STORAGE UNIT

150
CONTROL UNIT

100

# FIG. 13

210

220
WIRELESS
COMMUNICATION
UNIT

230
STORAGE UNIT

240
CONTROL UNIT

200

# FIG. 14

310
NETWORK
COMMUNICATION
UNIT

320
STORAGE UNIT

330
CONTROL UNIT

300

# FIG. 15

Radio Frame (10ms)

NON-BEAMFORMED  BEAMFORMED  NON-BEAMFORMED

Subframe(1ms)
#0  #1  #2  #3  #4  #5  #6  #7  #8  #9

frequency

time

SSS  PSS  PBCH

MBSFN Subframe

Slot (0.5ms)  Slot (0.5ms)

6 or 7 OFDM symbols

12 subcarriers

CRS

CRS

Resource elements

PDCCH  PDSCH
Resource block

PDCCH  PDSCH
Resource block

EP 3 442 142 B1

# FIG. 16

**100, 300 MACRO CELL BASE STATION**

**200A TERMINAL APPARATUS**

**200B TERMINAL APPARATUS**

S102 — SET MBSFN SUBFRAME

S104 — ARRANGE FIRST SYNCHRONIZATION SIGNAL AND SECOND SYNCHRONIZATION SIGNAL WITHIN ONE RADIO FRAME

S106 — ARRANGE FIRST PBCH AND SECOND PBCH WITHIN ONE RADIO FRAME

S108 — ARRANGE FIRST CRS AND SECOND CRS WITHIN ONE RADIO FRAME

S110 — BEAMFORM AND TRANSMIT MBSFN SUBFRAME AND TRANSMIT OTHER SUBFRAMES WITHOUT BEAMFORMING

S112 — RECEPTION PROCESSING REGARDING MBSFN SUBFRAME

S114 — RECEPTION PROCESSING REGARDING SUBFRAMES OTHER THAN MBSFN SUBFRAME

# FIG. 17

Radio Frame (10ms)

BEAMFORMED

Subframe(1ms)
#0 #1 #2 #3 #4 #5 #6 #7 #8 #9

frequency

time

SSS PSS PBCH

CRS

PDCCH PDSCH
Resource block

## FIG. 18

| 100A, 300 MACRO CELL BASE STATION | 100B SMALL BASE STATION | 200A TERMINAL APPARATUS | 200B TERMINAL APPARATUS |

SET MBSFN SUBFRAME — S202

INFORMATION INDICATING POSITION OF MBSFN SUBFRAME — S204

ARRANGE FIRST SYNCHRONIZATION SIGNAL AND SECOND SYNCHRONIZATION SIGNAL WITHIN ONE RADIO FRAME — S206

ARRANGE FIRST PBCH AND SECOND PBCH WITHIN ONE RADIO FRAME — S208

ARRANGE FIRST CRS AND SECOND CRS WITHIN ONE RADIO FRAME — S210

TRANSMIT SUBFRAMES OTHER THAN MBSFN SUBFRAME WITHOUT BEAMFORMING — S212

BEAMFORM AND TRANSMIT MBSFN SUBFRAME — S214

S216 — RECEPTION PROCESSING REGARDING MBSFN SUBFRAME

S218 — RECEPTION PROCESSING REGARDING SUBFRAMES OTHER THAN MBSFN SUBFRAME

EP 3 442 142 B1

# FIG. 19

**FIG. 20**

| 100A, 300 MACRO CELL BASE STATION | 100B SMALL BASE STATION | 200A TERMINAL APPARATUS | 200B TERMINAL APPARATUS |

SET MBSFN SUBFRAME ～S302

INFORMATION INDICATING POSITION OF MBSFN SUBFRAME ～S304

ARRANGE FIRST SYNCHRONIZATION SIGNAL AND SECOND SYNCHRONIZATION SIGNAL WITHIN ONE RADIO FRAME ～S306

ARRANGE FIRST PBCH AND SECOND PBCH WITHIN ONE RADIO FRAME ～S308

ARRANGE FIRST CRS AND SECOND CRS WITHIN ONE RADIO FRAME ～S310

BEAMFORM AND TRANSMIT MBSFN SUBFRAME AND TRANSMIT OTHER SUBFRAMES WITHOUT BEAMFORMING ～S312

S316

S314～ RECEPTION PROCESSING REGARDING MBSFN SUBFRAME

RECEPTION PROCESSING REGARDING SUBFRAMES OTHER THAN MBSFN SUBFRAME

EP 3 442 142 B1

FIG. 21

# FIG. 22

# FIG. 23

700

704          705

NETWORK I/F

706

703       702       701

STORAGE       MEMORY       PROCESSOR

# FIG. 24

800

810    810    820

825

WIRELESS COMMUNICATION I/F

827    826

| RF | | BB |

827    826

| RF | | BB |

821

CONTROLLER

824

823    822

| NETWORK I/F | | MEMORY |

# FIG. 25

## FIG. 26

EP 3 442 142 B1

# FIG. 27

EP 3 442 142 B1

**EP 3 442 142 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015045658 A
- US 2013148644 A